# NEW EUROPEAN PATENT SPECIFICATION

(11) **EP 2 357 098 B2**
(45) Date of publication and mention of the opposition decision: **22.12.2021**
(45) Mention of the grant of the patent: 29.10.2014
(21) Application number: 11153607.4
(22) Date of filing: 07.02.2011
(51) Int. Cl.: B60G 17/018, B62K 25/00, B62K 25/04

(54) **Method and apparatus for suspension adjustment**
Verfahren und Vorrichtung zur der Aufhängungseinstellung
Procédé et appareil d'ajustement de suspension

(30) Priority: 05.02.2010 US 302070 P
(43) Date of publication of application: 17.08.2011
(60) Divisional application: 14189773.6
(73) Proprietor: Fox Factory, Inc., Scotts Valley, CA 95066 (US)
(72) Inventor: Galasso, Mario, Watsonville, CA 95076 (US); Franklin, Joseph, Vancouver, WA 98662 (US); Laird, Andrew, Los Gatos, CA 95033 (US); Fox, Robert C., Los Gatos, CA 95030 (US); Kaswen, Robert David, Watsonville, CA 95076 (US); Haugen, David M., Pacific Grove, CA 93950 (US)
(74) Representative: Casbon, Paul Richard

(56) References cited:
- EP-A1- 1 241 087
- EP-A2- 0 304 801
- EP-A2- 2 103 512
- EP-A2- 2 479 095
- WO-A1-00/27658
- WO-A2-98/40231
- DE-A1- 10 326 675
- US-A1- 2003 155 164
- US-A1- 2003 216 845
- US-A1- 2004 123 654
- US-A1- 2005 040 941
- US-A1- 2006 107 538
- US-A1- 2006 235 652
- US-A1- 2007 038 408
- US-B1- 6 418 360

## Description

### BACKGROUND

### Field of the Invention

The present invention relates to a system for a vehicle, to a processor and a computer-readable memory for use in the system, to a communication device for use with the processor and computer-readable memory, and to a vehicle comprising the processor and the computer-readable memory.

### Description of the Related Art

Despite efforts to educate product managers, retailers, and end consumers on the importance of proper initial vehicle suspension set up, it is evident at event support and trail side encounters that many mountain bikes and motorcycles are ridden with improper suspension initial settings. An important initial setting is suspension "sag." Suspension sag is the measured distance a shock absorber compresses while the rider, wearing intended riding gear, is seated on (for example) a bicycle or motorcycle (or four wheeled vehicle) in a riding position, versus a fully extended suspension position (sag also applies to ATVs, trucks, and other suspension equipped vehicles). Getting the sag correct sets the front end steering/handling geometry, puts the rear suspension at its intended linkage articulation for pedaling efficiency (if applicable) and bump absorption and provides some initial suspension compression to allow the wheels/suspension to react to negative terrain features (e.g. dips requiring suspension extension) without the entire vehicle "falling" into those features. Often, any attention that is paid to this initial sag setting is focused on the rear suspension, especially in motorcycle applications, but making sure that both the front and rear sag settings are correct is equally important.

Another important initial setting is the rebound damping setting for the rear and the front vehicle suspensions. Rebound damping dissipates stored system spring energy after a suspension compression event and results in a controlled rate of return of the suspension to a more extended condition. It is important for the suspension not to rebound too quickly. In the case of rear suspension, this can result in the rear of the vehicle kicking off the ground and pitching the rider forward after encountering a bump or sharp compression obstacle ("bucking"). In the case of front suspension, it can cause impact to the rider's hands as the front suspension kicks back directly towards the rider in the case of quick rebound. It is also important for the suspension not to rebound too slowly. This can result in the suspension not returning quickly enough to respond to the next bump in a series of bumps, ultimately causing the suspension to "ratchet" itself down into a compressed state. Such a "ratchet" sequence is commonly referred to as suspension "packing." Packing can result in the suspension being overly stiff (due to retained compression) through the middle to the end of a series of bumps, causing the back of the vehicle kicking off the ground and pitching the rider forward in the case of the rear suspension and causing the suspension to get overly stiff and steering geometry to get steep and unstable in the case of the front suspension. Compression damping setting is similarly important.

Therefore, there is a need for methods and apparatus for assisting the operator of a vehicle to prepare and adjust one or more operating parameters of the vehicle for an optimum riding experience.

WO 98/40231 comprises the features of the preamble of claim 1 and discloses an active, hydraulic suspension system for a wheeled vehicle. The system utilizes an on-board damper controller, a damper having a pair of telescoping tubes and a motor-adjusted hydraulic channel, a position and direction sensor to achieve comprehensive control over dampening performance. The rider is allowed to change the damping performance by selecting a control map which dictates the damping force applied based on the position, direction of motion, and velocity of one tube relative to the other. The system continuously varies the amount of dampening in real time in response to the terrain conditions, as determined by a sensor. A processor in the damper controller accepts the sensor input and outputs motor control signals based on information existent in the control map. The motor adjusts the flow of a viscous liquid through the hydraulic channel of the damper in accordance with the control signals received from the damper controller to achieve the desired damping performance. An external computer may be used to load control maps to the damper controller for subsequent selection by a rider.

### SUMMARY OF THE INVENTION

According to the present invention there is provided a system for a vehicle, comprising:
a vehicle suspension,
   wherein the vehicle suspension comprises a vehicle shock absorber, wherein the vehicle shock absorber is mounted between an unsprung portion of the vehicle and a sprung portion of the vehicle and having a user-adjustable feature for adjusting performance of the vehicle shock absorber;
a sensor operable to measure an operational characteristic of the vehicle shock absorber and to output a signal representative of said operational characteristic; and
a processor in communication with the sensor and operable to receive and process said signal;
characterized in that said processor is operable to generate a suggested adjustment of the user-adjustable feature based on the processing of said signal, which suggested adjustment would change the performance of the vehicle shock absorber, and to output said suggested adjustment for indication to the user;
wherein the system further comprises a communication device operable to communicate with the processor and display data corresponding to the operational characteristic measured by the sensor;
characterized in that the communication device is operable by the user to make the suggested adjustment to the user-adjustable feature of the vehicle suspension;
wherein the vehicle suspension includes a damper valve, and the operational characteristic is a position of the damper valve between a full open and a full closed setting.

Preferably, the vehicle shock absorber includes at least one of a front shock absorber and a rear shock absorber of a vehicle.

Advantageously, the sensor includes a position sensor and the operational characteristic includes a position of the vehicle suspension.

Preferably, the position of the vehicle suspension corresponds to a stroke of the vehicle suspension during compression or rebound of the vehicle suspension.

Preferably, the processor is in communication with the sensor via at least one of wired communication and wireless communication.

Advantageously, the sensor is operable to measure a plurality of operational characteristics of the vehicle suspension, wherein the plurality of operational characteristics include position, velocity, and acceleration of the vehicle suspension.

Preferably, the sensor includes at least one of a potentiometer, an accelerometer, a GPS, a pressure sensor, and a piezoelectric sensor.

Advantageously, the system further comprises a computer system operable to communicate with the processor and display data corresponding to the operational characteristic measured by the sensor.

Preferably, the computer system and communication device includes at least one of a personal desktop computer, a laptop computer, and a handheld personal computing device.

Advantageously, the computer system is operable by the user to make the suggested adjustment to the user-adjustable feature of the vehicle shock absorber.

Preferably said processor comprises (i) a first processor for mounting on said vehicle and operable to receive said signal from said sensor, and (ii) a second processor to be used remote from said first processor and operable to communicate with said first processor, and wherein:
said first processor is operable to process said signal to generate said suggested adjustment, and to communicate said suggested adjustment to said second processor;
   and/or
said first processor is operable to communicate data representing at least part of said signal to said second processor.

According to other aspects of the invention there is provided for use in a system as set out above:
a processor and a computer-readable memory both mountable on a vehicle, said computer-readable memory storing computer-executable instructions that, when executed, cause said processor operable to receive a signal from the sensor corresponding to the operational characteristic of the vehicle shock absorber and to store at least some of said signal in said computer-readable memory; and to perform the following:
to process said signal and generate said suggested adjustment; and optionally to transmit said suggested adjustment to a remote communication device; and optionally to transmit at least some of said signal to said remote communication device.

In other aspects of the present invention there is provided for use with a processor and computer-readable memory as set out above, a communication device operable to receive at least some of said signal stored in said computer-readable memory, and then to process said signal and suggest to a user a suggested adjustment of the user-adjustable feature of the vehicle shock absorber, and optionally to display said signal corresponding to the operational characteristic measured by the sensor. In certain aspects computer-executable instructions to enable the communication device to perform these functions may be provided as part of a firmware upgrade, as a user-installed application (e.g. downloadable and installable from a website); as such, existing communication devices may be upgraded. New communication devices may be provided with the computer-executable instructions at point of manufacture.

According to other aspects of the present invention there is provided a vehicle comprising a processor and a computer-readable memory as aforesaid.

Described herein is also a kit comprising a processor and a computer-readable memory as set out above, and a sensor operable to measure an operational characteristic of a vehicle suspension.

In one embodiment useful for understanding the present invention, a system for a vehicle may comprise a sensor operable to measure an operational characteristic of the vehicle; a processor operable to receive data from the sensor corresponding to the operational characteristic; and a communication device operable to receive data from the processor and display information regarding the operational characteristic of the vehicle.

Preferably, the communication device includes a software program operable to generate the information based on the data received from the processor.

Advantageously, the sensor includes a position sensor and the operational characteristic includes an initial sag, compression, or rebound setting of the vehicle.

Preferably, the processor is in communication with the sensor via at least one of wired communication and wireless communication.

Advantageously, the processor is in communication with the communication device via at least one of wired communication and wireless communication.

Preferably, the information is an instruction to adjust the operational characteristic to a recommended setting.

Advantageously, the system further comprises a computer system operable to receive the data from the processor and display the data corresponding to the operational characteristic of the vehicle.

Preferably, the communication device is operable to adjust the operational characteristic of the vehicle to a recommended setting.

In one embodiment useful for understanding the present invention, a method for adjusting a suspension of a vehicle may comprise receiving suspension data with a processor; calculating a suspension setting suggestion with the processor; communicating the suspension setting suggestion to a user interface device; and adjusting the suspension based on the suspension setting suggestion.

Advantageously, the method further comprises obtaining the suspension data with a sensor coupled to the vehicle, and communicating the suspension data to the processor via at least one of wired communication and wireless communication.

Preferably, the method further comprises inputting the suspension data into the user interface device, and communicating the suspension data to the processor via at least one of wired communication and wireless communication.

Advantageously, the method further comprises communicating the suspension setting suggestion to the user interface device via at least one of wired communication and wireless communication.

Preferably, the method further comprises manually adjusting the suspension based on the suspension setting suggestion.

Advantageously, the method further comprises creating a profile, entering the suspension data into the profile using the user interface device, and communicating the suspension data to the processor.

Preferably, the method further comprises obtaining the suspension data and communicating the suspension data to the processor while operating the vehicle.

Advantageously, the method further comprises creating an electronic file with the user interface device, and tracking the suspension data and the suspension setting suggestion using the electronic file.

In one embodiment useful for understanding the present invention, a suspension system may comprise a vehicle suspension; a sensor positioned to sense a feature of the suspension; a processor having an operative communication link with the sensor and having an operative communication link with a computer readable medium; a transmitter having an operative communication link with the processor; and a graphical user interface having an operative communication link with the transmitter.

Preferably, the operative communication link with the sensor comprises a wire.

Advantageously, the operative communication with the transmitter comprises a wireless protocol.

In one embodiment the computer readable medium stores a first amount of information related to real time performance of the suspension and the graphical user interface receives a second amount of information related to the suspension performance and the first amount is greater than the second amount.

Preferably, the operative communication link with the sensor transfers information at a first data rate and the operative communication link with the transmitter transfers information at a second data rate and the first data rate is greater than the second data rate.

Advantageously, the feature comprises at least one of state of compression, velocity, internal pressure and temperature.

Preferably, the computer readable medium stores a first amount of information related to real time performance of the suspension and the graphical user interface receives a second amount of information related to the suspension performance and the first amount is greater than the second amount.

Advantageously, at least some of the information related to real time performance is retrieved by the processor, via the operative communication link with the computer readable medium, and is transformed by the processor into the information related to the suspension performance.

Preferably, the transmitter transmits at least some of the information related to the suspension performance to the graphical user interface via the operative communication link with the transmitter.

Advantageously, the graphical user interface includes a program for receiving information via the operative communication link with the transmitter.

Preferably, the program includes a template format for the graphical user interface into which format received data may be displayed.

Advantageously, the graphical user interface further processes the at least some of the information related to the suspension performance and displays a result within the template format.

Preferably, the result comprises a suggestion to alter a set up condition of the suspension.

Advantageously, the result comprises suspension usage efficiency data that illustrates the adequacy, or lack thereof, of the state of at least one initial set up condition.

Preferably, the processor has an operative communication link with a feature controller of the suspension and the feature controller comprises a damping adjuster.

Advantageously, the processor comprises a receiver and the graphical user interface comprises a GUI transmitter having an operative communication link with the receiver.

According to other embodiments useful for understanding of the present invention there is provided a vehicle suspension system comprising:
a first portion having a second portion movably engaged therewith;
a sensor positioned to sense an operational characteristic of the first portion relative to the second portion;
a processor in communication with the sensor and having a program to calculate data representative of the operational characteristic; and
a user interface for displaying a rendition of the data.

### BRIEF DESCRIPTION OF THE DRAWINGS

So that the manner in which the above recited features can be understood in detail, a more particular description may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 illustrates a schematic side view of a vehicle according to one embodiment.
Figure 2A illustrates a side view in cross section of a damper assembly according to one embodiment.
Figure 2B illustrates an enlarged view of part of the damper assembly of Figure 2A according to one embodiment.
Figure 3 illustrates a schematic block diagram of components of one embodiment of an electric lock out apparatus.
Figure 4 illustrates a block diagram of a system according to one embodiment.
Figure 5 illustrates a block diagram of a controller of the system according to one embodiment.
Figure 6 illustrates a block diagram of a program method for use with the system according to one embodiment.
Figures 7-11 illustrate examples of the program method steps according to one embodiment.
Figure 12 illustrates a block diagram of a process of use with the system according to one embodiment.

### DETAILED DESCRIPTION

Integrated damper I spring vehicle shock absorbers often include a damper body surrounded by a mechanical spring or constructed in conjunction with an air spring. The damper often consists of a piston and shaft telescopically mounted in a fluid filled cylinder. A mechanical spring may be a helically wound spring that surrounds the damper body. Various integrated shock absorber configurations are described in U.S. Patent Numbers 5,044,614; 5,803,443; 5,553,836; and 7,293,764.

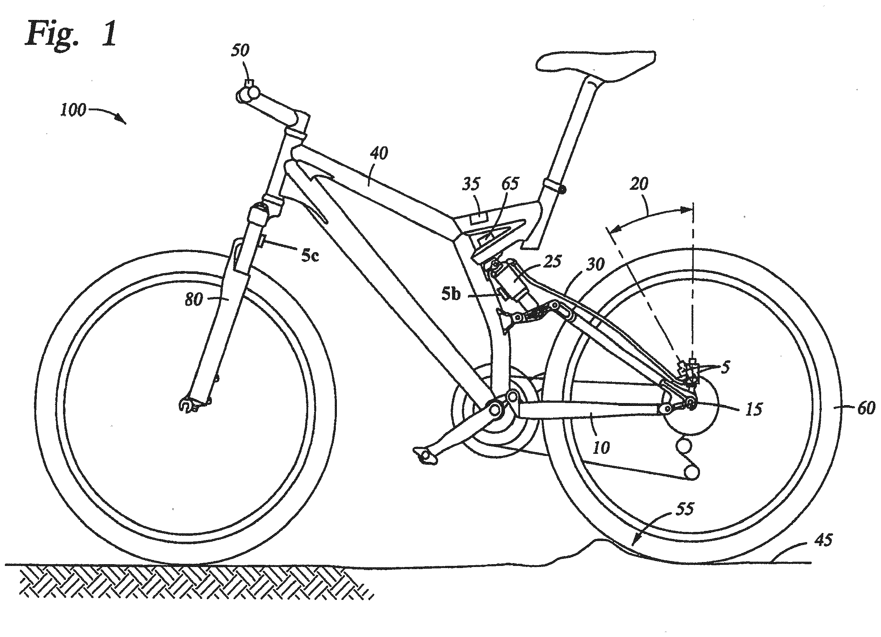

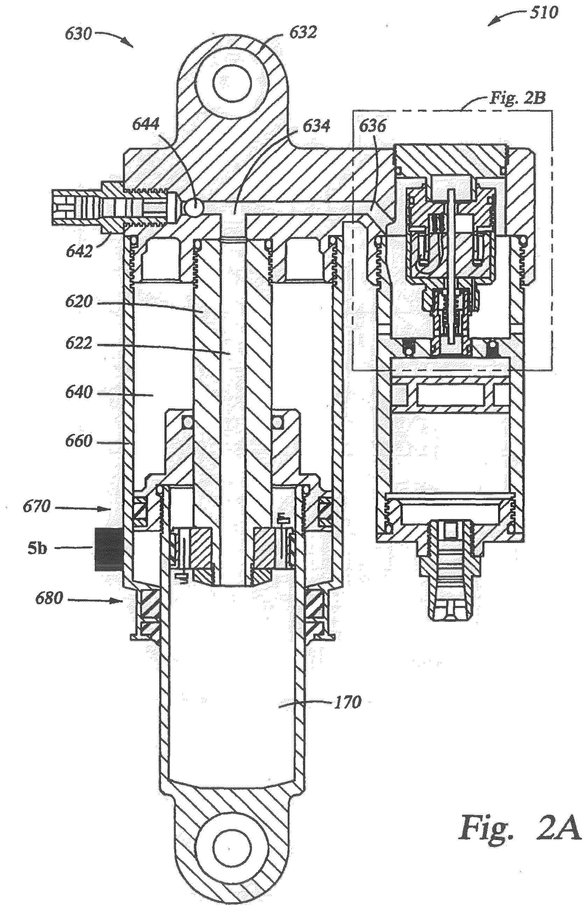

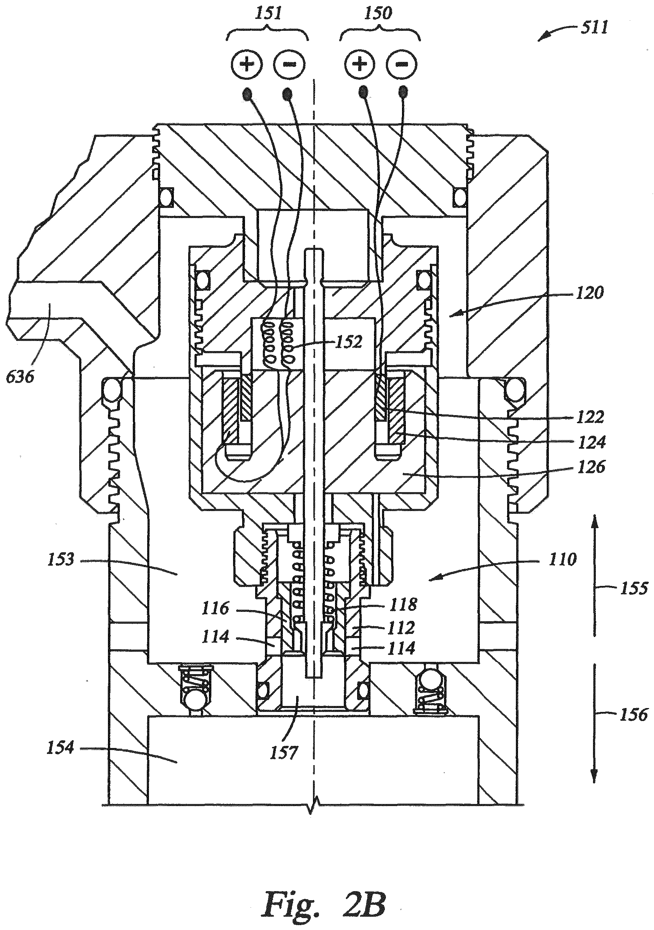

Figures 1 and 2 of U.S. Patent Number 5,044,614 show a damper body carrying a thread 42. A helical spring 18 surrounds the damper body. The compression in the helical spring 18 may be pre-set by means of a nut 48 and a lock nut 50. The nut 48 may be translated axially relative to the body ("tube") 16 and thread 42 by rotating the nut 48 around the threaded sleeve 42. Rotation of the nut 48 in a given direction (e.g. clockwise as viewed from end 44 for a right hand thread 42) will cause the nut to move toward the retainer clip 26 thereby compressing spring 18 between the nut 48 and the retainer clip 26. Once the spring 18 is in a desired state of compression, lock nut 50 is rotated, using a wrench, up against nut 48 and tightened in a binding relation therewith.

Some shock absorbers utilize gas as a spring medium in place of, or in addition to, mechanical springs. Gas spring type shock absorbers, such as for example those having integral dampers, are described in U.S. Patent Numbers 6,135,434; 6,360,857 and 6,311,962. U.S. Patent Number 6,360,857 shows a shock absorber having selectively adjustable damping characteristics. U.S. Patent Number 7,163,222 describes a gas sprung front shock absorber for a bicycle (a "fork") having a selective "lock out" and adjustable "blow off" function.

The spring mechanism (gas or mechanical) of some shock absorbers is adjustable so that it can be preset to varying initial states of compression. In some instances the shock spring (gas or mechanical) may comprise different stages having varying spring rates thereby giving the overall shock absorber a compound spring rate varying through the stroke length. In that way the shock absorber can be adjusted to accommodate heavier or lighter carried weight, or greater or lesser anticipated impact loads. In vehicle applications including motorcycle and bicycle applications and particularly off-road applications, shock absorbers are pre-adjusted to account for varying terrain and anticipated speeds and jumps. Shocks are also adjusted according to certain rider preferences (e.g. soft - firm).

A type of integrated damper/spring shock absorber, having a gas spring, is shown in Figure 28, for example, of U.S. Patent Number 7,374,028 ("'028 patent"). The shock absorber of Figure 28 also includes an "adjustable intensifier assembly 510." That intensifier or "reservoir" accepts damping fluid from chamber 170 as the fluid is displaced from that chamber by the incursion of rod 620 into chamber 170 during a compression stroke of the shock. The intensifier valve assembly regulates flow of damping fluid into and out of the reservoir, and an embodiment of the valve assembly is shown in Figure 17 of the '028 patent.

It is desirable to "lock out" the suspension, thereby rendering it substantially rigid, on certain vehicles at certain times. Such lock out may be particularly desirable on bicycles to reduce or eliminate so called "pedal bob" or "chain squat" (the cyclic compression and extension of suspension caused by the cyclic tension of the drive chain and the cyclic motion of the pedals, cranks and power input generally). It is noteworthy that the valve assembly of Figure 17 of the '028 patent may be replaced with any suitable valve assembly depending on the desired result. For example, when the valve is configured (as will be further described herein) with a selectable and correspondingly selected "lock out" (i.e. substantially complete valve closure) damping fluid is excluded from entering the reservoir and, the damping fluid being a relatively incompressible liquid, such exclusion prevents the volume of chamber 170 from being reduced and thereby prevents the shock absorber from compressing telescopically. Such "lock out" may be selectively provided via an external manual adjuster, such as for example knob 512 of Figure 17, or it may be provided automatically in response to some predetermined and sensed vehicle operation condition (e.g. smooth terrain). Alternatively, a "lock out" condition may be the default mode for the suspension whereby the suspension becomes active only upon some predetermined and sensed vehicle operation condition (e.g. rough terrain) wherein a sensor senses the condition and opens the "lock out" so that the suspension may operate for a prescribed period of time or terrain input..

Although described herein with respect to a bicycle suspension system, the embodiments illustrated in Figures 1-11 herein may be used with any type of suspended vehicle, as well as other types of suspension or damping systems.

Referring to Figure 1 herein, a vehicle, such as a bicycle, generally identified by reference numeral 100 comprises a frame 40 and front forks 80. In this embodiment the frame 40 has a suspension system comprising a swing arm assembly 10 that, in use, is able to move relative to the rest of the frame; this movement is permitted by, inter alia, a rear shock absorber and/or damping assembly 25. The front forks 80 also provide a suspension function via a damping assembly in at least one fork leg; as such the bicycle 100 is a full suspension bicycle (such as an ATB or mountain bike), although the embodiments described herein are not limited to use on full suspension bicycles. In particular, the term "suspension system" is intended to include vehicles having front suspension or rear suspension only, or both and other systems wherein motion damping is included (such as for example vehicle steering dampeners or machine part motion dampeners).

In one embodiment, a sensor 5 may be positioned proximate a rear axle 15 of the bicycle 100 for sensing changes in terrain. As shown in Figure 1, the sensor 5 is mounted on swing arm assembly 10 proximate the rear axle 15 of the bicycle 100. In one embodiment the angular orientation of a sensor 5 sensing axis is movable through a range or angle 20 (and is shown in each of two positions of many possible positions), thereby allowing alteration of a force component sensed by the sensor in relation to a force (vector) input into the rear swing arm 10. It is understood that the sensor 5 may be moved or mounted in any suitable configuration and allowing for any suitable range of adjustment as may be desirable. It is understood that the sensor may include one, two, three or more sensing axis'. That is useful for adjusting the sensitivity of the sensor 5 to various anticipated terrain and bicycle speed conditions. The bicycle speed affects the vector direction of a force input to the bicycle wheel for constant amplitude terrain 45 disparity 55 or "bump / dip." Varying size bumps and dips also affect the vector input angle to the wheel for constant bicycle speed. The movement of the swing arm is however limited to a mechanically determined trajectory. In one embodiment, a sensor 5b (also illustrated in Figure 2A) may be coupled to the rear suspension, such as shock absorber and/or damper assembly 25, for measuring the operational characteristics of the rear suspension. In one embodiment, a sensor 5c may be coupled to the front suspension, such as front forks 80, for measuring the operational characteristics of the front suspension. The operational characteristics may include at least one of position, velocity, acceleration, stroke, sag, compression, rebound, pressure, and temperature of the vehicle suspension.

The sensor 5 (and sensors 5b, 5c, 35, 65 and a pedal force sensor (not shown)) may be any suitable force or acceleration transducer (e.g. strain gage, wheatstone bridge, accelerometer, hydraulic cylinder, interferometer based, optical, thermal, acoustic or any suitable combination thereof). The sensor 5 may utilize solid state electronics, electro-mechanical principles, or any other suitable mechanisms. In one embodiment the sensor 5 comprises a single axis self powered accelerometer, such as for example ENDEVCO Model 2229C. The 2229C is a comparatively small device with overall dimensions of about 15 mm height by 10 mm diameter, and weighs about 4.9 g. Its power is self-generated and therefore the total power requirements for the bicycle 100 are reduced; this is an important advantage, at least for some types of bicycle, where overall weight is a concern. In one embodiment, the single axis accelerometer comprises the ENDEVCO 12M1A, which is of the surface-mount type. The 12M1A is a single axis accelerometer comprising a bimorph sending element which operates in the bender mode. This accelerometer is particularly small and light, measuring about 4.5 mm by 3.8 mm by 0.85 mm, and weighs about 0.12 g. In other embodiments, the sensor 5 may be a tri-axial accelerometer such as the ENDEVCO 67-100. This device has overall dimensions of about 23 mm length and 15 mm width, and weighs about 14 g. Other sensors known in the art may be used with the embodiments described herein.

In one embodiment, the sensor 5 may be attached to the swing arm 10 directly, to any link thereof, to an intermediate mounting member or to any other portion or portions of the bicycle 100 as may be useful for purposes disclosed herein. In one embodiment the sensor 5 is fixed to an unsprung portion of the bicycle 100, such as for example the swing arm 10, and another sensor 35 (such as an accelerometer as described above) is fixed to a sprung portion of the bicycle 100, such as for example the frame 40. Data from each sensor can, by a processor, be overlayed on a common time datum and suspension damping and/or spring effectiveness can be evaluated by comparing the data from the sensors on either "side" of the suspension unit. Sensors may be integrated with the vehicle structure and data processing system as described in U.S. Patent Numbers 6,863,291; 4,773,671; 4,984,819; 5,390,949; 5,105,918; 6,427,812; 6,244,398; 5,027,303 and 6,935,157. Sensors and valve actuators (e.g. electric solenoid or linear motor typenote that a rotary motor may also be used with a rotary actuated valve) may be integrated herein utilizing principles outlined in SP-861-Vehicle Dynamics and Electronic Controlled Suspensions SAE Technical Paper Series no. 910661 by Shiozaki et al. for the International Congress and Exposition, Detroit, Michigan, February 25 - March 1, 1991. Further, sensors and valves, or principles, of patents and other documents may be integrated into embodiments hereof, individually or in combination, as disclosed herein.

In one embodiment the shock absorber 25 is operatively mounted between an unsprung portion of the bicycle 100, such as the swing arm 10 and rear axle 15, and a sprung portion of the bicycle 100 such as the frame 40. A representative example embodiment of the shock absorber 25 derives from a modification, as disclosed herein, of the shock absorber shown in Figure 2B of, and elsewhere in, U.S. Patent Number 7,374,028 (the "'028" patent).

Referring to Figure 2A herein, an intensifier assembly 510 is shown in conjunction with a damper assembly 630. In one embodiment, the damper assembly 630 is disclosed in Figure 2B of the '028 patent and includes similar reference numerals. Figure 2B shows an embodiment of a valve assembly 511, such as an intensifier valve, for use with the embodiments disclosed herein. In one embodiment, the valve assembly 511 of Figure 2B replaces or may be used with the "adjustable intensifier assembly" 510, as shown in Figures 16, 17, 28 and elsewhere in the '028 patent. The valve assembly 511 is operable in response to electric current and is capable of being modulated or throttled for selective full opening, closing and intermediate opening or "throttle" positions. The valve assembly 511 comprises a valve portion 110 and an actuator portion 120. The valve portion 110 may include a cylinder 112 with one or more variable orifices 114 and a member (e.g. piston) 116 that moves within the cylinder 112 to control the opening of the orifice(s) 114. The valve assembly 511 is in a closed position when the piston 116 is covering the orifice(s) 114. The valve assembly 511 is in an open position when the piston 116 moves away from the orifice(s) 114 such that at least a portion of the orifice(s) 114 is opened. In the open position, fluid may flow into the valve portion 110 and may flow out of the valve portion 110. The position of the piston 116 relative to the orifice(s) 114 varies the orifice opening and the flow through the valve portion 110. The valve assembly 511 may thus provide an output pressure in response to an input flow.

The valve portion 110 may also include a spring 118 that applies a force against the piston 116 to bias the piston 116 toward the closed position. Fluid pressure against the piston 116 may result in a force that exceeds the spring force causing the piston 116 to move and open the orifice(s) 114.

The actuator portion 120 may also apply a force to the piston 116. The actuator portion 120 may advantageously be back drivable to permit the pressure term to push open the valve, for example, during the onset of a high shock event. One embodiment of the actuator portion 120 is a voice coil type linear actuator including a voice coil 122, a magnet 124, and a back iron 126. The back iron 126 is coupled to the piston 116 such that linear movement of the back iron 126 causes linear movement of the piston 116.

The actuator portion 120 may be controlled using a command such as a voltage command, for example, provided by drive electronics. A voltage command or signal to the actuator portion 120 causes current to flow through the coil 122, creating a magnetic field that applies a force to the magnet 124 and back iron 126. Different voltage commands may thus correspond to different amounts of force applied to the piston 116 in the valve assembly 511. In one embodiment the signals and actuator are configured to move the valve completely between a full open ("unlocked") and a full closed position ("locked") thereby allowing the damper to move or substantially locking it, i.e. adjusting the damping rate of the damping assembly 630 between minimum and maximum respectively.

Although one exemplary valve is shown, those skilled in the art will recognize that other types of valves may be used. Although the exemplary actuator 120 is a voice coil type linear actuator, those skilled in the art will recognize that other types of actuator technologies may be used. For example, the sensors, switches, controllers, actuators and other operative elements hereof may comprise optical circuitry and as such the power source may comprises an optical (or other electromagnetic) generator such as a "LASER" and wiring and circuits used herein may comprises fiber optic and optic circuitry including Bragg grating technology and other suitable "electrical equivalents." The elements hereof may be operable in whole or in part based on sonic wave or microwave transmission and suitable waveguide technology may be employed. An operation of an intensifier valve that may be used with the embodiments described herein is disclosed in U.S. Patent Number 7,299,112.

It should be noted that 122 and 124 are interchangeable such that the voice coil may be either 122 or 124 and the magnet may be the other of 122 and 124 respectively. The voice coil 122 or 124 responds to input current from the power circuit (e.g. position control circuit or other suitable electrical input as described herein). As such input wiring is desirable. The input wiring and terminals for the 122 version of the voice coil is shown at 150. The input wiring and terminals for the 124 version of the voice coil is shown at 151 and includes windings 152 to accommodate extension and contraction of the throughput wires 152 during operation of the valve assembly 511.

The valve assembly 511 is shown in a closed or downward 156, position. As such, piston 116 fully obstructs orifices 114 thereby preventing fluid from flowing from damper assembly 630, through channel 636, into upper chamber 153, through orifice 114, through valve outlet 157 and into floating piston compensator chamber 154. When current of an appropriate magnitude is applied to the voice coil 122 or 124, the magnet electromagnet combination of 122 and 124 causes the back iron 126, and correspondingly the valve piston 116, to move upward 155 in an amount proportional to the voice coil input. Such upward 155 movement is against spring 118, which biases the valve piston 116 downward 156 (i.e. toward closed), and therefore when the voice coil input balances with the force of spring 118, movement of the piston 116 will stop and the valve assembly 511 will be correspondingly throttled.

In operation, the sensor 5 (and/or sensors 5b, 5c, 35) puts out a voltage change corresponding to an input force (for example the outputs from both sensors 5, 5b, 5c, 35 may be reconciled in a controller or processor 65 (described in greater detail below), such as a microprocessor, having an algorithm for weighting their respective inputs and generating a resulting singular command or signal based on a predetermined logic). In one embodiment the sensor 5 senses an input force along the prescribed range or axis 20. A bump in the terrain 45 typically exerts a force 55 on a tire/wheel 60 of the bicycle 100. The angle of the resolved force 55 relative to the tire/wheel 60 is typically normal (substantially) to the tire/wheel 60 at the point of impact. That force 55 then imparts a component of the impact 55 to the axle 15 as dictated by the trajectory of the swing arm linkage 10. That component can be sensed by the sensor 5 at a magnitude corresponding to the orientation of the sensor range or angle 20. The sensor axis orientation can be adjusted to make the sensor 5 more or less sensitive (by imparting more or less of the impact 55 to the sensor range or axis 20) to bumps and dips in the terrain.

It is envisaged that there are various ways the remote lock/unlock function of the rear shock absorber 25 and/or front shock absorber 80 may be provided on the bicycle 100. In one embodiment, remote lock/unlock may be entirely automatically controlled by a controller 65 in response to the input from the sensors 5, 5b, 5c and/or 35 when the bicycle 100 is in use. Optionally, the user may be able to override and/or adjust this automatic control using a device 50. In one embodiment, the remote lock/unlock of the rear shock absorber 25 and/or front shock absorber 80 may be entirely controlled at the user's discretion using the device 50; in such an embodiment the sensors 5, 5b, 5c and/or 35 need not be provided on the bicycle 100 and the user locks and unlocks the suspension system according to his or her own preferences at the time.

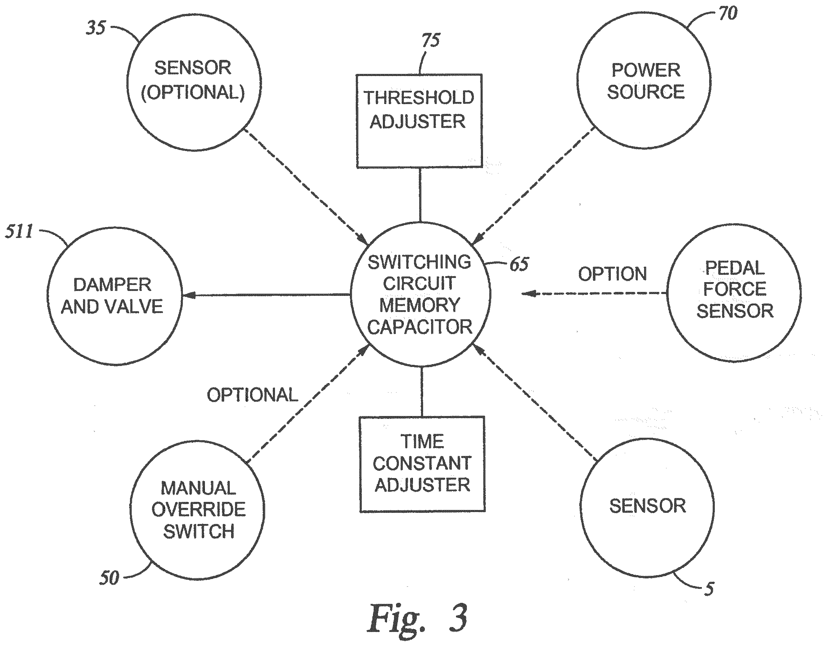

Referring to Figure 3 herein, when the sensor 5 puts out a voltage corresponding to a bump (and/or optionally a dip) that voltage is transmitted to a controller 65 (e.g. comprising a memory and a processor/microprocessor, or an ASIC). In one embodiment the shock absorber 25, including damper assembly 630, intensifier assembly 510, and/or valve assembly 511 (shown in Figures 1, 2A, and 2B) is responsive to signals and power transmitted from the controller or processor 65. The valve assembly 511 is default in the closed position and will throttle open corresponding to power input received at terminals 150. The processor or controller 65 compares the output voltage of sensor 5 to a preset (by means of threshold adjuster 75 such as, for example, a potentiometer) value and if that value is exceeded, the controller routes a predetermined amount of power from the power source 70 (e.g. suitable battery, capacitor, photovoltaic generator or other suitable mechanism or combination thereof) to the valve assembly 511. Optionally the controller 65 compares the output voltage to a magnitude comparator value over time (the time constant is also user adjustable). In that option the magnitude of the output voltage must remain above a given threshold value for a predetermined amount of time before the controller 65 will route power to the valve assembly 511. When the output voltage falls below the threshold value, power to the valve assembly 511 is shut off. Optionally, the controller 65 may taper power off over a selectable period of time as part of the shut off function. Optionally, multiple threshold values may be set in the controller 65. At each threshold value may direct a differing amount of power from the source 70 to the valve assembly 511. If, for example, only a lower threshold is met, the controller 65 may direct an amount of power only corresponding to a partial opening of the valve assembly 511. If a higher threshold is met the directed amount of power may correspond to a full open valve assembly 511. Multiple time constants may also (independently or additionally) be preset for different corresponding valve assembly 511 function levels. Optionally the valve assembly 511 may be of a type described in U.S. Patent Number 6,073,736. Optionally, the valve control/power circuit may be configured and operable in a manner such as disclosed in U.S. Patent Numbers 5,971,116 and 6,073,736, or by any other means or method disclosed herein or any suitable combinations or portions thereof.

In one embodiment, a device 50 is provided in a location convenient for user manipulation during vehicle operation. In one embodiment, the device 50 may be a manual lock out (or unlock or both) switch. In one embodiment, the device 50 is provided on the handlebar of the bicycle 100 (or other part of the bicycle 100 that is reachable during use). Optionally the device 50 includes the functions of locking and unlocking valve assembly 511, adjusting threshold(s) 75 and adjusting time constant(s) all as shown in Figure 3. Thus at its simplest, the device 50, such as a manually operated button, trigger or lever, allows the user to remotely lock/unlock the rear shock absorber 25 (and/or the front shock 80) at will. The device 50 may cause both front and rear shocks to lock/unlock together, or it may permit the user to lock/unlock each shock independently.

In one embodiment, the device 50 comprises a lever that is shiftable by the user of the vehicle 100. The lever may shift between first and second positions (each corresponding to a "lock" and "unlock" command to the damping assembly). Alternatively, the lever may move away from a first position and then return to that position having switched between locked and unlocked during the movement; such movement may be similar to the way indexed (e.g. ratcheted) gear shifters operate.

In one embodiment, the device 50 comprises a digital user interface device provided with buttons and/or a touch screen enabling the user to lock and unlock the damping assembly at will. The device 50 may comprise a suitable GPS unit, bicycle computer, heart rate monitor, smart phone, personal computer, cloud connected computer and may further comprise connectivity to the internet. The device 50 may send and receive data via cell phone bands, satellite bands or other suitable electromagnetic frequencies to connect with other computer networks for the sending and or receiving of data wherein the data may be received by and transformed by an outside computing machine and transmitted to the device 50 in an altered form or in a new form corresponding to the result of the outside machine transformation. The functionality of the device 50 may be incorporated into performance recording devices and/or digital user interfaces, such as, but not limited to, the GARMIN EDGE series of devices, and smart phones such as the Apple iPhone or Motorola with Droid.

In one embodiment, the device 50 may provide additional functionality to enable to user to remotely control the rear and/or front shock more finely. For example, the device 50 may permit the user to remotely set a shock (i.e. the amount that the valve assembly 511 is open/closed) at one of a number of predefined (e.g. indexed) positions in transition between locked and unlocked, or may permit the user set the shock at substantially any ("infinite" or "continuous" adjustment) position between those two limits. For example the position of the valve assembly 511 may correspond with a position of an indicator on the device 50. The indicator may be a visual indication (e.g. digital or graphical indicator), or a physical indicator (e.g. position of a lever between two limit positions).

The default or pre-biased position of the valve assembly 511 may be either open or closed, or somewhere in between. In one embodiment, the valve assembly 511 is default set open. In one embodiment, the actuator portion 120 moves the valve portion 110 in one direction from its default or bias and it returns to bias by means of the spring 118 or other suitable biasing mechanism when the actuator portion 120 ceases to function. Controller or processor 65 monitors sensor 5 and/or 35 and after a time period of input corresponding to below threshold sensor output the controller 65 directs power to valve assembly 511 sufficient to close the valve portion 110 (the electromagnetic or voice coil being reversed by power input and the spring 118 set as a tensile spring to hold the valve portion 110 open by default). Optionally (or independently and absent the sensors 5 and 35) the device 50 communicates a signal to the controller 65 and the controller 65 correspondingly directs power from source 70 to the valve assembly 511 thereby closing the valve assembly 511 completely or partially as desired. Optionally, a rider of the bicycle 100 may manipulate the device 50 to cause the valve assembly 511 to close, to open, to throttle at intermediate positions, as desired while operating the bicycle 100 on varying terrain (to eliminate pedal bob or maximize ride comfort or traction).

Some or all of components of embodiments herein including sensors and switches, processor or controller 65, shock absorber 25, intensifier assembly 510, and/or valve assembly 511 at terminals 150 or 151, may be interconnected or connected by wire 30, wireless, WAN, LAN, Bluetooth, Wi-Fi, ANT (i.e. GARMIN low power usage protocol), or any suitable power or signal transmitting mechanism. It is particularly desirable in certain embodiments that the device 50 communicate wirelessly with the controller 65. An output electric signal from the device 50 is transmitted to the controller 65. The controller 65 responds to that signal by adjusting the damping rate of the damping assembly 630 to lock or unlock, and/or set at some intermediate level according to the output electric signal.

In one embodiment, the shock absorber 25, including damper assembly 630, intensifier assembly 510, and/or valve assembly 511, further operates with mechanically variable damping and/or spring features when the valve assembly 511 is open or partially open. In one embodiment, the valve assembly 511 is positioned in series with the "adjustable intensifier assembly" 510 valve of US patent 7,374,028 so that fluid must traverse both valves between the damper channel 636 and the compensator chamber 154. In operation, the damping function of the shock absorber 25 is consistent with the operation of the intensifier assembly 510 when the valve assembly 511 is open. Other mechanical shock absorber functions may also be integrated with the present disclosure such that the shock absorber 25 is highly versatile and functional when valve assembly 511 is open. Such features are disclosed for example in U.S. Provisional Patent Application Serial Number 61/157,541, and any individual or combination of features disclosed therein is suitable for combination with embodiments of this present disclosure. In one embodiment of operation, it is desirable to have the features of a highly versatile yet robust mechanically adjustable shock absorber in combination with the electric lock out presently disclosed.

In one embodiment, the controller 65 takes a derivative (differentiation) of the acceleration to determine the rate of change of acceleration for forecasting and implementing adjustment of valve assembly 511 (rebound issue is a big deal) or for determining a data rate or density required to adequately represent current suspension behavior (to for example to cull high rate raw data into more manageable yet representative data streams or sets). For example, if a bump is encountered followed immediately by a dip, it may be desirable to have the rebound of the tire into the dip (terrain following for traction advantage) occur very rapidly. If the valve assembly 511 were opened to an intermediate state as determined by the controller 65, for the bump an immediately following large magnitude reversal of the derivative of the acceleration (as input from the sensor 5) may indicate that the controller 65 direct the power source to full opening of the valve assembly 511 to allow maximum rebound velocity. The controller 65 may also compare input from sensors 5 and 35 to determine optimum setting position for the valve assembly 511. For example, if input from sensor 35 is relatively low in magnitude the controller 65 may open the valve assembly 511 gradually until some increase in sensor 35 is noted and then close the valve assembly 511 back slightly from that. In one embodiment, if input from sensor 35 is consistent in frequency with input from a pedal force sensor (e.g. U.S. Patent Number 5,027,303), the controller 65 may direct a closure of the valve assembly 511 until such synchronization is eliminated or reduced.

It is noted that embodiments herein of shock absorber 25 and related systems are equally applicable to the vehicle, such as bicycle 100, front forks 80. Further, it is contemplated that the bicycle 100 may include both shock absorber 25 and forks 80, both of which having some or all of the features disclosed herein.

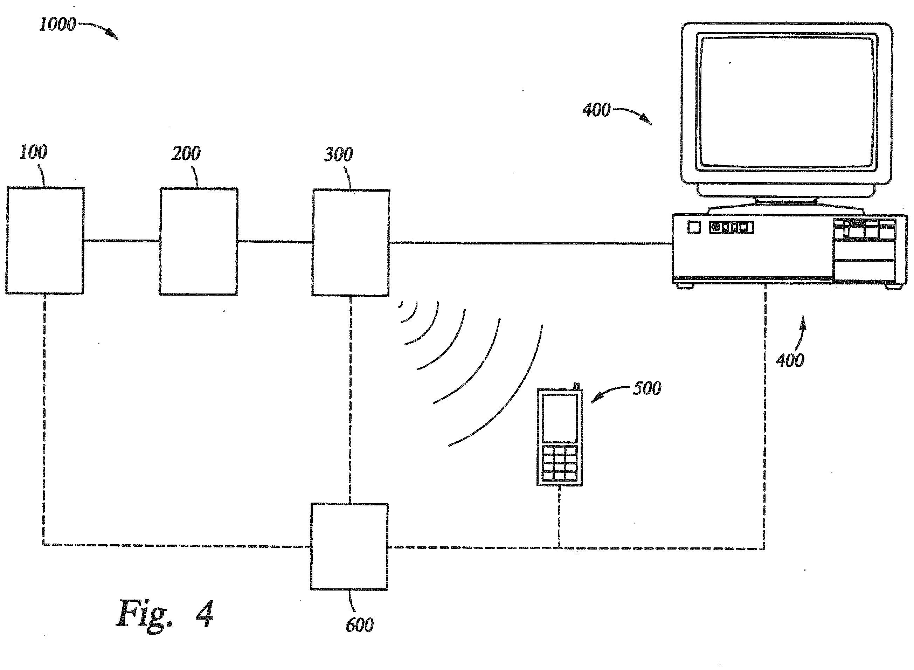

Figure 4 illustrates a system 1000 according to one embodiment. The system 1000 may include a vehicle 100 (such as vehicle 100 described above), one or more sensors 200 (such as sensors 5, 5b, 5c, 35 described above), a processor or controller 300 (such as processor or controller 65 described above), a computer system 400, and a communication device 500 (such as device 50 described above). An operator or user 600, such as a rider of the vehicle 100, may use the system 1000 according to the embodiments described herein. In one embodiment the vehicle 100, such as a bicycle, is equipped with the processor 300, such as a suspension setup microcomputer device comprising at least one memory, program having an algorithm and computer for executing the program, which captures data in the memory from the sensors 200 that are coupled to one or more vehicle 100 suspension components (such as a fork and rear shock on a bicycle or motorcycle). The data may include suspension component relative position data (e.g. inches of compression or full extension or full compression or any suitable combination of such data) and/or other operational characteristics/features of the vehicle 100 that are measured by the sensors 200. The data may be communicated to the controller 300 via wired and/or wireless communication, and the controller 300 may process the data and communicate the data via for example an industry standard, low power wireless protocol to the communication device 500, such as an external 3rd party device with a display, to instruct the user 600 on what adjustments to make to improve the vehicle 100 suspension setup and/or to describe the current performance of the vehicle 100 suspension system. In one embodiment, the user 600 may use the computer system 400 and/or the communication device 500 to adjust one or more components of the vehicle 100, automatically, manually and/or remotely, wired and/or wirelessly, directly, manually and/or indirectly (such as via the controller 300) during and/or after operation of the vehicle 100.

In one embodiment, the sensor 200 is mounted to a vehicle suspension component, such as front forks 80 of bicycle 100 illustrated in Figure 1. The sensor 200 may be coupled to the vehicle 100 and may be operable to measure an operational characteristic of a vehicle component, such as the vehicle suspension. In one embodiment, the sensor 200 may be directly coupled to the vehicle component for direct measurement of that component's operational characteristics. In one embodiment, the sensor 200 may be coupled to a portion of the vehicle 100 apart from the vehicle component and may be operable for indirect measurement of that component's operational characteristics. In one embodiment, the sensor 200 may be positioned at any location relative to the vehicle 100 and may be operable to measure an operational characteristic of the vehicle 100 directly or indirectly (e.g. inferred from the position of a vehicle component, such as the position of the vehicle suspension linkage, or the sprung versus un-sprung portion of the vehicle component for example. The sensor 200 is used to determine the position, velocity, and/or acceleration of the suspension component (raw sensor data is used to calculate such parameters within the processor). The sensor 200 may be a linear potentiometer, a string potentiometer, a contact or non-contact membrane potentiometer, a rotary potentiometer (such as if used on a linkage fork or a rear suspension linkage), an accelerometer or accelerometers, a 3D global position sensor ("GPS"), a pressure sensor (for measuring the air spring or coil spring compression), and/or other type of sensor from which a damper assembly position of the vehicle 100 can be determined.

These sensors 200 may communicate either wired or wirelessly to the controller 300, such as a microcomputer device, to communicate the sag position or any other suitable data. Due to potentially high sampling rate requirements associated with suspension movement and power considerations (e.g. economy), it is preferable at this time to communicate from the vehicle suspension sensors 200 to the controller 300 via one or more wires (which can for example carry more data than wireless), including electrical and fiber optical wires, for example. It is expected that in the future wireless protocols and battery life may be such that wireless high speed communication (although possible today) between the sensors 200 and the controller 300 will become more practical and is therefore contemplated hereby. In one embodiment, the data sampling rate is about 500 Hz to allow sufficient sampling and resolution of the vehicle suspension movement during operation.

In one embodiment, the controller 300 is relatively small (about 2" x 3-3.5" x 0.5-0.625") and lightweight so as to not negatively impact the user 600 of the vehicle 100. In one embodiment the controller 300 need not literally "control" anything but rather may cull data and send the result to the device 50 or 500. In one embodiment, the controller 300 may contain one or more of the following major components: a low power microprocessor, a wireless communication chip (such as ANT+, Bluetooth, and/or Wi-Fi 802.11 n), a battery, and flash memory. The controller 300 may also have other sensors on board such as a GPS, a compass, an accelerometer, an altimeter, and/or an air temperature sensor. The controller 300 may also have one or more external features such as multi-color LED's to communicate basic state of operation and battery charge to the user 600, and buttons to toggle power and start/stop data logging. The controller 300 may also have an external mini USB connector to connect to a computer, such as the computer system 400, for uploading of data and charging the battery. The controller 300 may also have external connectors to connect to any wired sensors 200.

In one embodiment, the controller 300 (such as a computer or a microcomputer) may record and evaluate the typically high frequency vehicle 100 suspension data in real time. The controller 300 may analyze parameters like sag (static ride height), rebound and compression speed, top out and bottom out events. Then, after analysis is complete, the controller 300 may communicate to the communication device 500, such as an external 3^{rd} party user interface device (e.g. 50 or 500), via an industry-standard, lower power wireless communication protocol in simple and small data packets at about 1 Hz to about 10 Hz. Because there are many user interface devices that already have ANT+ and/or Bluetooth built in (e.g. Garmin GPS, power meters, iPhone and iPod, etc.) it is contemplated that certain embodiments hereof will be so compatible. These interface devices generally have large displays with a developed GUI and user navigation method via any or all of buttons, joystick, touch screen, etc. The built in wireless capabilities are ideal for low density data transmittal, but are not well suited for high speed data acquisition (because low power wireless data rates are generally limited). By leveraging the existing device (e.g. 500) display and GUI capabilities, the applicability of the system is increased. In one embodiment the device 500 is programmed with a data template or templates suitable for filling with data and/or calculations/suggestions from the controller 300. In one embodiment the device 500 is programmed with input templates for facilitating user input of suspension model, user weight, vehicle type, etc. as may be useful in aiding the controller to look up corresponding parameters. The controller 300 will communicate to the communication device 500 selected data or calculations (e.g. graphical, tabular, textual or other suitable format) to display to the user 600, such as suggestions for adjusting spring preload, air spring pressure (to adjust sag), rebound damping setting, compression damping setting, bottom out damper setting, etc. Communication will also work in reverse to allow the user 600 to enter data, such as model of suspension, rider weight, etc., in the communication device 500 which will relay the information to the controller 300. From such model information the controller 300 will look up model relevant parameters and use those to aid in calculating suggestions.

In one embodiment, the controller 300 functions as a data receiver, processor, memory and data filter. The controller 300 receives high frequency (high sampling rate) data from the suspension sensor(s) 200. Because current user interface devices, particularly those using wireless protocol, may not be capable of high enough data rates to directly monitor the suspension sensors 200, the controller may act as a high data rate intermediary between the suspension sensors 200 and the communication device 500. In one embodiment, the controller 300 is configured to prompt and accept high sampling rate data from the suspension sensors 200. The controller 300 then stores the data and processes selected data at selected intervals for transmission to a user interface of the communication device 500, for example. In other words the controller 300 pares the effective data rate and makes that pared data transmission to the user interface in real time. Additionally, the controller 300 stores all un-transmitted data for later analysis if desired. The controller 300 can later be plugged into the computer system 400, such as a home computing device or laptop via a USB pigtail or dongle device. The controller 300 may also preprocess data and generate user friendly viewing formats for transmission to the user interface of the communication device 500. The controller 300 may calculate data trends of other useful data derivatives for periodic "real time" (effectively real time although not exact) display on the user interface of the communication device 500.

In one embodiment, each vehicle 100 suspension component is equipped with a position sensor 200 for indicating the magnitude (or state) of extension or compression existing in the vehicle 100 suspension at any given moment. As the suspension is used over terrain, such a sensor 200 will generate a tremendous amount of data. Relatively high sampling rates are needed to capture meaningful information in devices operating at such high frequencies. In one embodiment, a suitable telescopic tube of the vehicle 100 suspension is equipped or fitted with two piezoelectric sensors 200. In one embodiment, one of the piezoelectric sensors 200 is a high frequency exciter which is configured on the tube such that it (substantially) continuously induces impacts to a wall of the tube. In lay terms, the sensor 200 thumps or pings the tube wall on a continual basis. In one embodiment, the second piezoelectric sensor 200 is an accelerometer fixed or configured with the tube wall so as to monitor vibration of the tube wall. In one embodiment, the exciter and the monitor are vibration ally isolated so as not to directly influence each other. In one embodiment, the frequency of the exciter is intentionally set well outside any resonant mode of the suspension tube as it travels through its operational suspension stroke. In one embodiment, a sensing frequency of the monitor is selected to coincide (substantially) with at least one resonant mode range of the tube as it travels through its operational stroke.

In one embodiment, the aforementioned exciter and monitor are calibrated, in conjunction with the controller 300, so that values for resonant frequencies (in a selected mode or modes) of the suspension tube (or other suitable and variably "ringing" suspension component) are correlated with axial extension / compression of the suspension containing or including the tube. Such correlation data is stored with the controller 300 for use in real time calculation of axial suspension position based on real time input from the suspension resonant frequency monitor. The tube will tend to resonate regardless of the exciter frequency so by monitoring the change in resonant frequency or tube "ringing", with the monitor, the axial position of the suspension can be derived within the controller 300.

In one embodiment, the exciter and monitor act on and measure resonance with a cavity of the vehicle 100 suspension wherein cavity resonance versus axial suspension displacement is calibrated and correlated for use in the controller 300. In one embodiment, magnetic flux leakage of a suspension component, or magnetic imposition of current in a surrounding conductive structure, is correlated with axial suspension displacement. In one embodiment, optics are used (e.g. Doppler effect). In one embodiment, a magnet is affixed to one portion of the suspension and a conductor is affixed to a relatively movable portion of the suspension so that when the suspension moves axially the relative movement between the magnet and the conductor generates a changing current of flux in the arrangement (and that can be correlated with axial movement). In one embodiment, sonic or ultrasonic waves are used to excite a portion of the suspension and the changing reflective sonic signals are monitored to determine axial disposition of the suspension.

In one embodiment, vehicle 100 suspension components include scan compatible identification codes specifying at least model type and possibly including details including performance specifications (also including manufacture details such as lot, factory source, build date, inventory numbers, invoice or tracking numbers, subassembly/assembly numbers, etc). In one embodiment, the codes and/or data are included on a chip embedded in the suspension. In one embodiment, the chip is an active or passive radio frequency identification ("RFID") (optionally including data) chip. In one embodiment, the controller 300 detects the chip and based on the data received there from proceeds to configure, or suggest configuration for, the suspension.

In one embodiment, the controller 300 operates in set up mode where it uses rider input weight and suspension product data to suggest initial spring preload and damper settings for the vehicle 100 suspension. In one embodiment, the controller 300 operates in a ride mode wherein it monitors suspension movement (e.g. average travel used versus available, portion or range of travel used, number and severity of bottom out or top out events) and then uses that data in conjunction with the rider and suspension data to suggest changes to the suspension set up that better utilize or maximize usage of the suspension capabilities. In one embodiment the controller monitors compression range of the suspension to determine whether or not the suspension is set up for optimal use of its range over a given terrain. Too many top out events or bottom out events or operation generally over only a portion of the available range will indicate a possibly needed adjustment to the spring pressure and / or damping rate and the controller 300, upon calculating such range usage sends an appropriate suggestion to the device 500. In one embodiment a GPS unit of, for example the device, transmits real time GPS data to the controller 300 and such data is overlayed or paired with corresponding suspension data along an elapsed (or relative sequence) time (or other suitable common data marker or "datum" type) synchronous data marker.

In one embodiment, rebound setting can be automatically achieved by utilizing the air spring pressure or coil spring preload needed to achieve proper sag. The rebound setting is then achieved via feeding the air spring pressure for an air shock, or an oil pressure signal for a coil shock, down the damper shaft to a pressure sensitive damping valve at the damper shaft piston. There would still be an external rebound adjustor to make incremental changes from the predetermined setting to account for varied terrain/conditions, and/or riding style and preference.

In one embodiment, initial sag can be automatically set and facilitated by having a position valve within the shock for a given length bleed off air pressure until a specific sag level is achieved. Each shock stroke would have a specific length of sag/position valve. The user 600 would pressurize their shock to a maximum shock pressure of, for example, 300 psi or so. The actual max number is not important at this point. The idea is to over pressurize the shock beyond any reasonable properly set sag pressure. The user 600 then switches the shock to be in setup or sag mode. The user 600 then sits on the bike. In one embodiment, the shock will bleed air from the air spring until the position valve encounters a shut off abutment which thereby shuts the bleed valve. In one embodiment, the shock, having an axial position sensor 200 and a controller 300, to measure that compression of the shock from full extension (or any selected set "zero" position datum), "knows" it is extended beyond a proper sag level and a an electrically actuated valve is opened to bleed air pressure from the air spring in a controlled manner until the proper predetermined sag level is reached, at which point the valve automatically closes and the shock opts itself out of sag mode. Alternatively, the user 600 can switch the sag set up mode off upon reaching a proper sag setting. In one embodiment, with the controller 300 in normal ride mode the user 600/vehicle 100 will now be in a proper starting point for their sag measurement. When in riding mode, more pressure can be added to the air spring or pressure can be reduced from the air spring to accommodate different rider styles and or terrain. This auto sag feature can be achieved electronically as well, by having a position sensor 200 in the shock, and the shock model data allowing the controller 300 to adjust spring preload (e.g. air pressure) appropriately for the given model (as determined by the controller 300 in a query) what sag measurement it should achieve. An electronically controlled pressure relief valve is utilized to bleed off air spring pressure until the sensor 200 determines the shock is at its' proper sag. The pressure relief valve is then directed to close. Proper sag is achieved.

In one embodiment, the system 1000 can be utilized by integrating certain data collection sensors 200 to both aid in initial set up and to provide hints on how to tweak the vehicle 100 suspension system beyond an initial set up. At least position sensors 200 would be incorporated into the shock or the fork. The sensors 200 communicate with the controller 300. In one embodiment, the sensor 200/controller 300 interface would be wireless. A wired connection would still be acceptable. Data (e.g. model, specifications) corresponding to all possible suspension products that may interface with the controller 300 would be stored in the controller 300 so when one or another of those products is plugged in, or booted up if wirelessly connected, the controller 300 would know lengths, travels, external adjustment features etc. For that/those products the controller 300 would then walk the user 600 through a proper set up routine, starting with sag for example. The user 600 would sit on the bike and the rider sag measurement for the fork and shock would be displayed on the communication device 500 for example. The controller 300 will know what product it is trying to get adjusted properly and will make pressure recommendations for the user 600 to input to the shock or fork. The user 600 will then sit on the bike again, and in this iterative and interactive process, arrive at a perfect sag setting for the fork and shock product being used. In a more elaborate system, the controller 300 will "know" what pressure is in the fork and shock, and will make rebound recommendations based on those settings. In a simpler form, the controller 300 will ask the user 600 to input their final sag attaining pressures and will then make rebound recommendations based on the product and pressures. The controller 300 will also make compression damping setting recommendations based on the product it knows it is communicating with. The user 600 will then go out and ride the product. The controller 300 will transfer to data logging mode once the bike is being ridden or in a simpler form when the user 600 puts the system into ride mode. The controller 300 will log and save bottom out events, average travel used, identify too quick or too slow rebound events, etc. If average travel is more than a specified amount, the controller 300 will make recommendations on settings to have the system hold itself up better in the stroke. If the average travel used in less than a specified amount the controller 300 will make recommendations on settings to utilize more travel. Full travel events will be evaluated versus the average travel used data and make recommendations on how to reduce or increase the amount of full travel events. Computer (PC/laptop) software will be developed so the data logged can be downloaded to the computer system 400 for further evaluation. A website, such as the FOX RACING SHOX website, can be utilized as a place for riders to go to check out settings other riders are using and why, and to provide a way to "geek out" and spend time in a community, such as a FOX RACING SHOX community. In one embodiment, the controller 300 will log ridden hours and will prompt the user 600 to perform certain maintenance operations, and when data is downloaded to the computer system 400, such as a desktop/laptop machine, a link to the service procedure for the particular recommended service will pop up. The link will be to a video guild on how to perform the service, tools needed etc., if a user 600 is at the max of a particular adjustment feature on the closed or open side, the controller 300 will make a recommendation to have a service provider, such as FOX RACING SHOX, re-valve their system to get that particular adjustment feature into the middle of its' range again, and will make recommendations to a service technician, such as a FOX RACING SHOX service tech, on what direction to make the valving changes, etc. A more elaborate system 1000 can incorporate accelerometers, pressure sensors, etc.

The electronically adjustable damping as described herein and in US provisional patent application serial no. 61/175,422 may be integrated with the controller 300 and associated features described herein such that in one embodiment the controller 300 calculates needed changes based on sensor 200 input and facilitates those changes to dampers, air springs or other suitably adjustable suspension portions.

In one embodiment, the system 1000 may include one or more of the following features: electric (or electronic) sensor(s) (accelerometer) that senses upward acceleration of the wheel; electric (or electronic) valve(s) that has the same response time or faster as a mechanical (BrassMass) inertia valve fork cartridge; a lightweight, small form factor, fast charging battery that provides 30 hours of ride time (enough to race a 24 hour event); a fixed blow off; and a velocity sensitive shimmed damping.

In one embodiment, the system 1000 may include one or more of the following features: a processor to actively process sensor data and adjust opening of valve accordingly; a wireless communication to vehicle handlebar mounted control console (also rear shock compatible); an adjustable manual mechanical blow-off; an electronic wirelessly adjustable blow-off; an adjustable "g" threshold to open valve; an adjustable "timer" to dose valve; an adjustable low speed bleed (which could be a separate adjustment, or a trim adjustment of the main on-off valve); a program mode where it automatically alters open and closing parameters based on sensor input (for example sensing a rock garden); auto (Inertia sensing)/On (always lockout)/Off (no lockout) modes; a wheel speed sensor that can also dictate how the fork responded; a travel sensor either for bottom out, or discrete travel points (to aid in proper sag); and a data storage.

In one embodiment, the system 1000 may include one or more of the following features: battery charging via base stud with cap (similar to 36/40); all battery/sensing/actuation at bottom of cartridge; manual mechanical rebound adjust on top; on/off and/or auto on/off switch or system; a GPS could be incorporated to program in sections for race courses, either ahead of time, or on the fly for multi lap races (this could even be used for a DH course with a prolonged pedaling section).

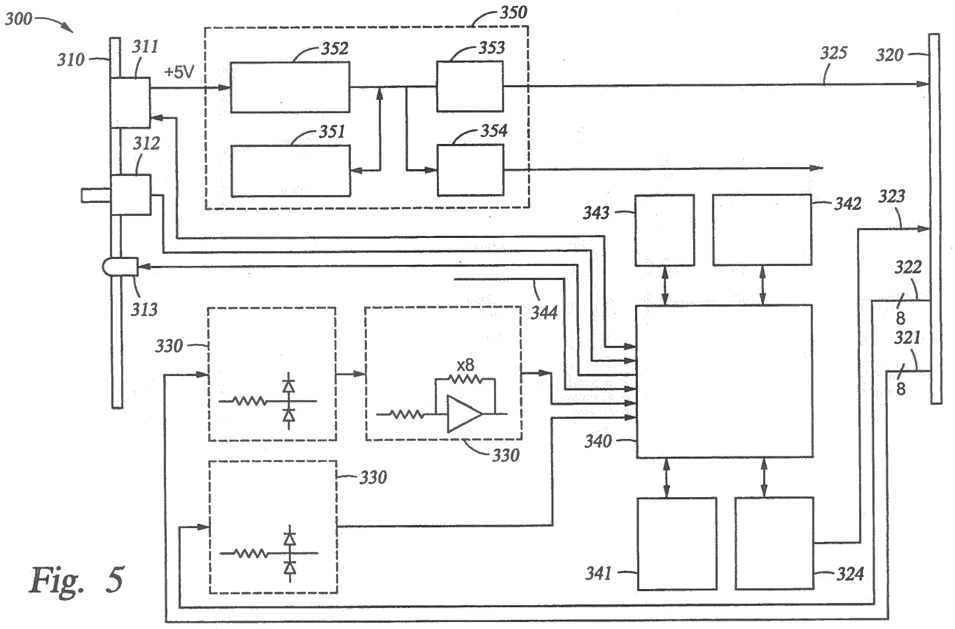

Figure 5 illustrates a block diagram of the controller 300 according to one embodiment. The controller 300 may include a water-proof housing (and shock resistant components or potting) having a front panel 310 and a rear panel 320. The front panel 310 may comprise a connection assembly 311, such as a universal serial bus ("USB") port, for data read-out and/or power or battery charging; a switch 312, such as a momentary contact switch for turning the controller 300 on and off; and an indicator 313, such as a light emitting diode ("LED") for on/off and power or battery status. The rear panel 320 may comprise one or more analog inputs 321, such as eight analog inputs each having 10 bit, 500 Hz SR, and 5V ratio-metric communication features; and one or more digital inputs 322, such as eight digital inputs for communication with Reed/Hall-type switches. The analog and digital sensor signals received by the inputs 322, 321 may be communicated to one or more ESD and/or signal conditioning devices 330. The rear panel 320 may comprise a serial port 323/324 for communication with one or more serial devices, such as GPS and Bluetooth; and a power output 325 for transmitting a 5V and/or 20mA signal. Each of the components and/or devices in communication with the controller 300 via the front and rear panels may also communicate with a processor 340 of the controller 300.

The processor 340, such as a microprocessor or mirco-computer, may communicate with a ANT radio frequency transceiver 343 (e.g. ANT AP2 module, 20 x 20 x 3mm surface-mount), a memory card socket 342 (for communication with a SD card (2GB), for example), a debug serial interface 341, and one or more analog inputs 344, such as four analog inputs for self-test including Li-polymer battery voltage, +3.3V logic power supply, +5.0V sensor supply, and internal temperature sensor (e.g. LM34-type). The controller 300 may also include a power system 350 including a battery 351, a battery charger 352, and one or more converters 353, 354, such as voltage converters. In one embodiment, the battery 351 may be a Li-polymer battery with the following features: 850mA-hr charge, about 36mm x 62mm x 3.9mm dimensions, and a 90 minute charge from USB with about an 8-plus hour operating life. In one embodiment, the converter 353 may be a voltage converter operable to provide a +5.0V power signal to one or more sensors in communication with the controller 300. In one embodiment, the converter 354 may be a voltage converter operable to provide a +3.3V power signal to processor 340 and one or more components in communication with the processor. In one embodiment, the components of the controller 300 may provided on a printed circuit assembly size of about 1.6" x 3.0" x 0.3" in dimension, including a 0.062" thick circuit 6-layer circuit board, a 0.200" top-side max component height, and/or a 0.040" bottom-side max component height. In one embodiment, the processor 340 may be configured to send and/or receive one or more signals to and from the other components of the controller 300 for use with the embodiments described herein.

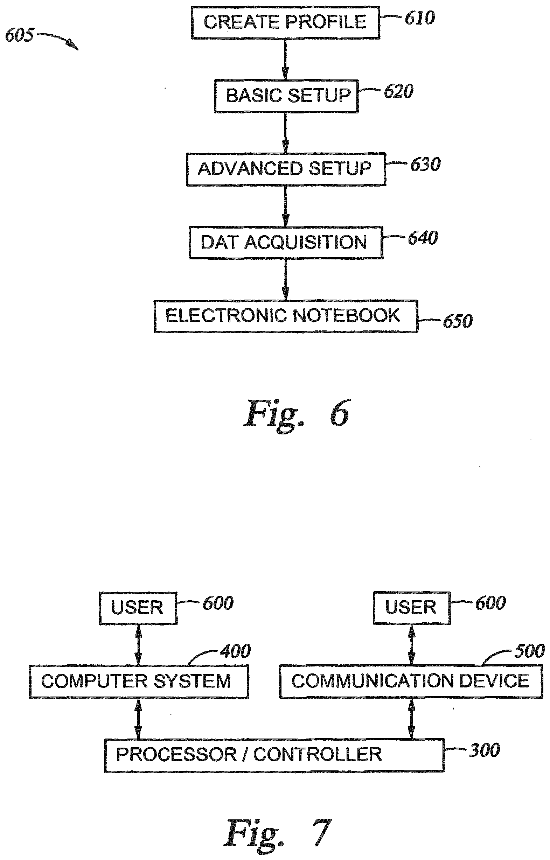

Figure 6 illustrates a block diagram of a software program 605 that may be used with the system 1000, according to one embodiment. Figures 7-11 illustrate a block diagram example of each step of the software program 605 process. The steps used with the software program 605 may be performed and/or repeated in any order.

A first step 610 may include creating a profile. As illustrated in Figure 7, data about the vehicle 100 and the user 600 may be entered by the user 600 on the computer system 400 (e.g. PC, laptop, etc.) and/or on the communication device 500 (e.g. iPhone, iPod, Garmin, other interface devices, etc.). The computer system 400 may be configured with the full features of the software program, and may include a hard drive to store the vehicle 100 and user 600 data, which data may also be saved to the controller 300. The communication device 500 may include a minimal set of essential questions to be answered by the user 600, the responses to which may be communicated to the controller 300. The data may be stored on the computer system 400 and/or the communication device 500, and may also be sent and stored on the controller 300. The controller 300 may include a storage directory that can transfer and/or receive data from the computer system 400 and/or the communication device 500. Data regarding the basic and advanced setup (further described below) may be stored in the controller 300 in an alternate location on a memory card to be used internally. Several profiles can be stored on the controller 300 for use with different vehicles 100. The computer system 400 and/or communication device 500 can be used to select the profile to activate on the controller 300.

A second step 620 may include setting up basic vehicle 100 parameters. The software program for use with the system 1000 may assist shops and individuals with basic setup parameters of their vehicle 100 components, such as the vehicle suspension. The software program may run on all interface platforms, and may bring the user 600 through a step by step structured procedure to set up the vehicle 100 component based on the data of the vehicle 100 and the user 600 from the profile, as well as specific riding conditions and style anticipated. In one embodiment, the software program may work without the controller 300, but without automatic measurement and some limitations.

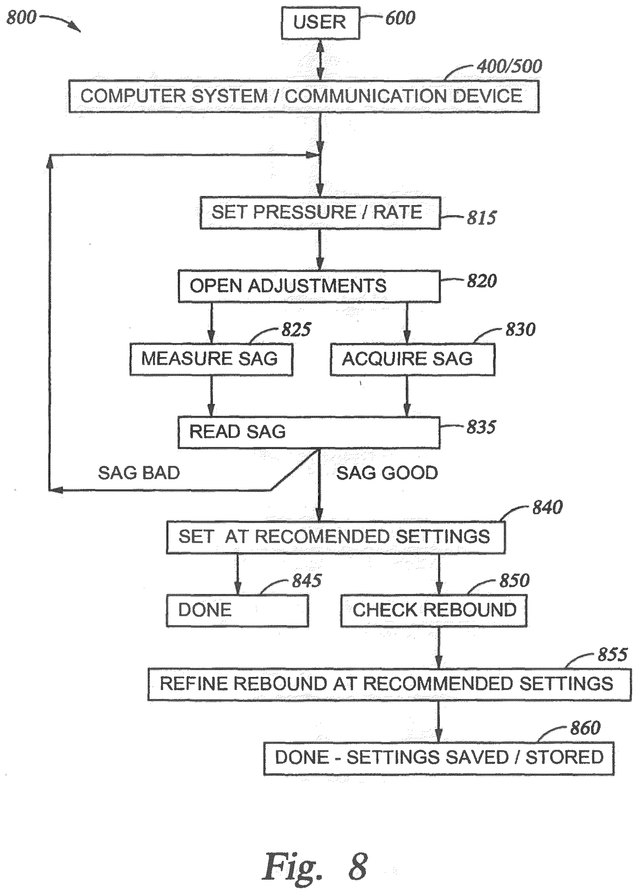

Figure 8 illustrates a procedural example 800 of the second step 620 used to set up basic vehicle 100 suspension system parameters. In particular, the user 600 communicates with the computer system 400 and/or the communication device 500 as described in the first step 610 to provide user 600 and vehicle 100 data, which the software program may then use to guide the user 600 through a set up procedure. In one embodiment, the data may be manually entered if no controller 300 is present. A first command prompt 815 may instruct the user 600 to set shock absorber pressures and spring rates based on vehicle type, user weight and style. A second command prompt 820 may instruct the user 600 to open the vehicle 100 damper adjustment. If the controller 300 is not available, a third command prompt 825 may instruct the user 600 to get on the vehicle 100, bounce, and measure the sag. If the controller 300 is available, a fourth command prompt 830 may instruct the user 600 to get on the vehicle 100 and bounce, so that the controller 300 can acquire the sag. A fifth command prompt 835 may instruct the user 600 to read the percentage sag, and if the sag is bad, the user 600 may be directed to the first prompt 815 to repeat the procedure. However, if the sag reading is good, then a sixth prompt 840 may instruct the user 600 to set the shock absorber and damper at recommended settings. If the controller 300 is not available, a seventh command prompt 845 may notify the user 600 that the basic set up procedure is complete. If the controller 300 is available, an eighth command prompt 850 may instruct the user 600 to compress the vehicle's 100 front and rear suspension against the ground and then pick the vehicle 100 up off the ground quickly to acquire/check rebound settings. A ninth prompt 855 may instruct the user 600 to refine the rebound to a recommended setting. A final prompt 860 may notify the user 600 that the basic set up procedure is complete and/or that the final set up parameters have been saved and stored.

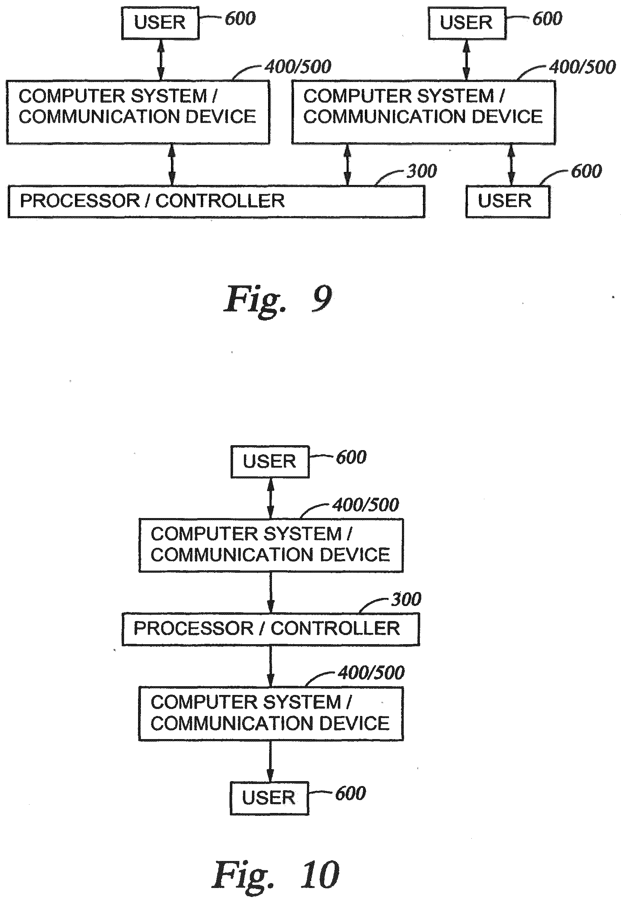

A third step 630 may include setting up advanced vehicle 100 parameters. As illustrated in Figure 9, the user 600 may set the controller 300 via the computer system 400 and/or communication system 500 into an advanced setup mode where it collects data from the sensors 300 and processes the data. The controller 300 may collect data while riding the vehicle 100 and process the data with parameters from the profile created in the first step 610. In one embodiment, when in the advanced setup mode, the controller 300 collects data from front and rear position, as well as the wheel speed sensors 300 (and any additional sensors that are used) for example during the operation of the vehicle 100. The data is processed to collect significant metrics such as maximum compression and rebound velocities, number of bottom outs, average ride height, and/or pedal bob detection. The data results are updated and stored in an onboard memory device. When connected back to the computer system 400 and/or communication device 500 at the end of the operation of the vehicle 100, a series of questions may be prompted by the controller 300 to the user 600. The questions may be displayed in a fixed format on a user interface or display of the computer system 400 and/or the communication device 500. Based on the answers to the questions provided by the user 600 and the processed data, suggestions will be made to the user 600 as how to further refine the vehicle 100 setup. This is an interactive process so the process can be repeated to continue to develop the vehicle 100 setup.

A fourth step 640 may include acquiring data from the sensor(s) 200 about the operation of the vehicle 100. As illustrated in Figure 10, the user 600 may set the controller 300 via the computer system 400 and/or communication system 500 into a data acquisition mode where it collects and stores raw data from the sensors 300. In one embodiment, when in the data acquisition mode, the controller 300 collects data from front and rear position, as well as the wheel speed sensors 300 (and any additional sensors that are used) for example during the operation of the vehicle 100. The controller 300 may collect the data while riding the vehicle 100 and store the data on the memory card without processing the data. When connected back to the computer system 400 and/or communication device 500 at the end of the operation of the vehicle 100, the data can be downloaded thereto and analyzed. Additional post processing may be performed on the data once downloaded to assist in the analyzing of the data. The computer system 400 and/or communication device 500 can be used to graphically display the data and allow for manipulation, such as through math channels and overlaying data. The software program on the computer system 400 and/or communication device 500 may generate reports, such as histograms of travel, damper speeds, and pedal bob detection. The data acquisition may be thought of as an advanced function, so it is left to the user 600 to interpolate the data and decide on changes to make. An instructional guide may be provided.

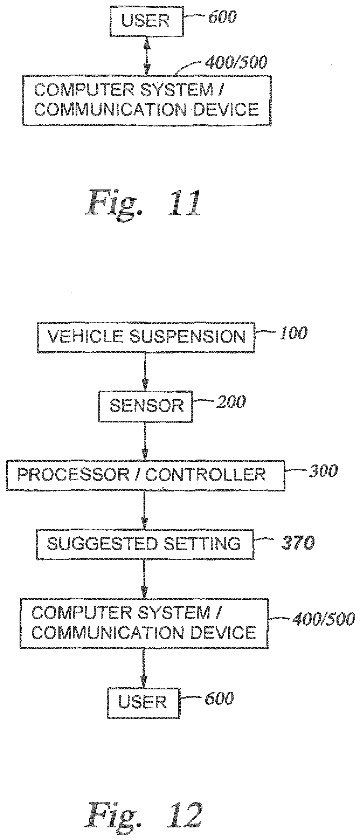

A fifth step 650 may include setting up an electronic file, such as an electronic notebook. As illustrated in Figure 11, the user 600 may create, edit, and view the electronic notebook using the computer system 400 and/or the communication device 500. The electronic notebook can be used to track vehicle 100 setups and user 600 notes about the vehicle handling, as well as general notes about races, rides, and conditions. Vehicle setups will be able to be saved to the electronic notebook from the profile created in the first step 610 described above. The vehicle setups can be transferred back to the controller 300, the computer system 400, and/or the communication device 500 to run the basic and/or advance set up procedures for different events and/or vehicles. Tracking changes to the vehicle will be one of the key features of the software program so that a history/database of what changes were made to the vehicle 100 and what effect they had will be compiled. The electronic notebook can be searchable so that a symptom can be searched and possible past solutions can be easily found.

In one embodiment, the system 1000 may be used to acquire performance data, including the operation of one or more components of the vehicle 100 and the location of the vehicle 100, during operation of the vehicle 100. The performance data may be associated with a time maker to track the actual time when the performance data was measured. Using the system 1000, the user 600 can utilize the performance data to correlate the actual location of the vehicle 100 at a specific time to a specific operational characteristic of a component of the vehicle 100. In this manner, the user 600 may be able to plot a course over which the vehicle 100 can be operated, and adjust the vehicle 100 components to an optimum setting as the vehicle 100 is operated along the course.

In one embodiment, the user 600 may be able to view the data acquired by the controller 300 during operation of the vehicle 100 via the communication device 500, which may be coupled to the vehicle 100 in any manner for ease of viewing. In one embodiment, the user 600 may be able to view the data acquired by the controller 300 during and/or after operation of the vehicle 100 via the computer system 400 and/or the communication device 500. In one embodiment, the controller 300 may be operable to acquire data from the sensors 200 coupled to the vehicle 100 at pre-determined intervals. In one embodiment, the controller 300 may be operable to automatically adjust (increase, decrease, maintain) the intervals at which to acquire data from the sensors 200 based on the operating performance of the components of the vehicle 100.

Figure 12 illustrates a block diagram of one process of use with the system 1000 according to the embodiments described herein. As illustrated, during, prior to, and/or after operation of the vehicle 100, the sensor 200 may measure an operational feature of one or more components of the vehicle 100, such as the travel of the vehicle suspension. The processor or controller 300 may be operable to receive the measurement data from the sensor 200 via wired and/or wireless communication. The processor or controller 300 may analyze the data and compare the data to pre-programmed vehicle suspension operational settings that are stored on the processor or controller 300. Based on the analysis, the processor or controller 300 may output a suggested vehicle setting 370 to the computer system 400 and/or communication device 500 via wired and/or wireless communication. The suggested vehicle setting 370 may be displayed on the computer system 400 and/or communication device 500, and may be in the form of an instruction regarding an adjustable feature of the vehicle 100 suspension. A rendition of the measurement data that will aid the user 600 in evaluating the setting of an adjustable feature of the vehicle 100 suspension may also be displayed.

As will be appreciated by one skilled in the art, aspects of the invention may be embodied as a system, method or computer program product. Accordingly, aspects of the invention may take the form of an entirely hardware embodiment, an entirely software embodiment (including firmware, resident software, micro-code, etc.) or an embodiment combining software and hardware aspects that may all generally be referred to herein as a "device," "sensor," "processor," "controller," or "system," such as system 1000. Furthermore, aspects of the invention (such as one or more embodiments of the vehicle 100, the sensor 200, the processor or controller 300, the computer system 400, and/or the communication device 500) may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the invention (such as one or more embodiments of the vehicle 100, the sensor 200, the processor or controller 300, the computer system 400, and/or the communication device 500) may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks illustrated in one or more of Figures 1-12.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks illustrated in one or more of Figures 1-12.

In one embodiment, a suspension system may comprise a vehicle suspension, a sensor, a computer readable medium, a processor, a transmitter, and a graphical user interface. The sensor may be positioned to sense a feature of the suspension. The computer readable medium may have an operative communication link with the sensor. The processor may have an operative communication link with the computer readable medium. The transmitter may have an operative communication link with the processor. And the graphical user interface may have an operative communication link with the transmitter.

In one embodiment, a suspension system may comprise a vehicle suspension, a sensor, a processor, a transmitter, and a graphical user interface. The sensor may be positioned to sense a feature of the suspension. The processor may have an operative communication link with the sensor, and an operative communication link with a computer readable medium. The transmitter may have an operative communication link with the processor; and the graphical user interface may have an operative communication link with the transmitter.

In one embodiment, the operative communication link with the sensor comprises a wire. In one embodiment, the operative communication with the transmitter comprises a wireless protocol. The operative communication link with the sensor may transfer information at a first data rate, and the operative communication link with the transmitter may transfer information at a second data rate. The first data rate may be greater than the second data rate. The feature of the suspension may comprise at least one of state of compression, velocity, internal pressure and temperature.

In one embodiment, the computer readable medium stores a first amount of information related to real time performance of the suspension, and the graphical user interface receives a second amount of information related to the suspension performance. The first amount of information may be greater than the second amount of information. At least some of the information related to real time performance may be retrieved by the processor, via the operative communication link with the computer readable medium, and may be transformed by the processor into the information related to the suspension performance. The transmitter may transmit at least some of the information related to the suspension performance to the graphical user interface via the operative communication link with the transmitter. The graphical user interface may include a program for receiving information via the operative communication link with the transmitter. The program may include a template format for the graphical user interface into which format received data may be displayed. The graphical user interface may further process at least some of the information related to the suspension performance and may display a result within the template format. The result may comprise a suggestion to alter a set up condition of the suspension. The result may comprise suspension usage efficiency data that illustrates the adequacy, or lack thereof, of the state of at least one initial set up condition.

In one embodiment, the processor may have an operative communication link with a feature controller of the suspension, and the feature controller may comprise a damping adjuster.

In one embodiment, the processor may comprise a receiver, and the graphical user interface may comprise a GUI transmitter having an operative communication link with the receiver.

In one embodiment, a vehicle suspension system may comprise a first portion having a second portion movably engaged therewith. A sensor may be positioned to measure an operational characteristic of the first portion relative to the second portion. A processor may be in communication with the sensor and may have a program to calculate data representative of the operational characteristic. A user interface may be used for displaying a rendition of the data.

While the foregoing is directed to embodiments of the invention, other and further embodiments of the invention may be implemented without departing from the scope of the invention, and the scope thereof is determined by the claims that follow.

## Claims

1. A system (1000) for a vehicle (100), comprising:
a vehicle suspension (25; 80),
wherein the vehicle suspension comprises a vehicle shock absorber, wherein the vehicle shock absorber is mounted between an unsprung portion of the vehicle and a sprung portion of the vehicle and having a user-adjustable feature for adjusting performance of the vehicle shock absorber;
a sensor (5, 5b, 5c, 35; 200) operable to measure an operational characteristic of the vehicle shock absorber (25; 80) and to output a signal representative of said operational characteristic; and
a processor (65; 300) in communication with the sensor (5, 5b, 5c, 35; 200) and operable to receive and process said signal;
**characterized in that** said processor (65; 300) is operable to generate a suggested adjustment (370) of the user-adjustable feature based on the processing of said signal, which suggested adjustment would change the performance of the vehicle shock absorber (25; 80), and to output said suggested adjustment for indication to the user;
wherein the system further comprises a communication device (500) operable to communicate with the processor (35; 300) and display data corresponding to the operational characteristic measured by the sensor (5, 5b, 5c, 35; 200);
**characterized in that** the communication device (500) is operable by the user to make the suggested adjustment (370) to the user-adjustable feature of the vehicle suspension (25; 80);
wherein the vehicle suspension includes a damper valve, and the operational characteristic is a position of the damper valve between a full open and a full closed setting.

2. The system of claim 1, wherein the vehicle shock absorber includes at least one of a front shock absorber and a rear shock absorber of a vehicle.

3. The system of claim 1 or 2, wherein the sensor (5, 5b, 5c, 35; 200) includes a position sensor and the operational characteristic includes a position of the vehicle suspension (25; 80).

4. The system of claim 3, wherein the position of the vehicle suspension (25; 80) corresponds to a stroke of the vehicle suspension during compression or rebound of the vehicle suspension.

5. The system of any of claims 1 to 4, wherein the processor (65; 300) is in communication with the sensor via at least one of wired communication and wireless communication.

6. The system of any preceding claim, wherein the sensor (5, 5b, 5c, 35; 200) is operable to measure a plurality of operational characteristics of the vehicle suspension (25; 80), wherein the plurality of operational characteristics include position, velocity, and acceleration of the vehicle suspension.

7. The system of any preceding claim, wherein the sensor (5, 5b, 5c, 35; 200) includes at least one of a potentiometer, an accelerometer, a GPS, a pressure sensor, and a piezoelectric sensor.

8. The system of any preceding claim, further comprising a computer system (400) operable to communicate with the processor (65; 300) and display data corresponding to the operational characteristic measured by the sensor (5, 5b, 5c, 35; 200).

9. The system of claim 8, wherein the computer system (400) and communication device (500) includes at least one of a personal desktop computer, a laptop computer, and a hand-held personal computing device.

10. The system of claim 8 or 9, wherein the computer system (400) is operable by the user to make the suggested adjustment (370) to the user-adjustable feature of the vehicle shock absorber (25; 80).

11. The system of any of claims 1 to 7, wherein said processor comprises (i) a first processor (300) for mounting on said vehicle (100) and operable to receive said signal from said sensor (5, 5b, 5c, 35; 200), and (ii) a second processor to be used remote from said first processor (300) and operable to communicate with said first processor, and wherein:
said first processor is operable to process said signal to generate said suggested adjustment (370), and to communicate said suggested adjustment (370) to said second processor;
and/or
said first processor is operable to communicate data representing at least part of said signal to said second processor.

12. For use in a system as claimed in any of claims 1 to 11, a processor (65; 300) and a computer-readable memory both mountable on a vehicle (100), said computer-readable memory storing computer-executable instructions that, when executed, cause said processor (65; 300) to receive a signal from the sensor corresponding to the operational characteristic of the vehicle shock absorber (25; 80) and to store at least some of said signal in said computer-readable memory;
and to perform the following:
to process said signal and generate said suggested adjustment (370), and optionally to transmit said suggested adjustment (370) to a remote communication device (500); and optionally
to transmit at least some of said signal to said remote communication device (500).

13. For use with a processor (65; 300) and computer readable memory as claimed in claim 12, a communication device (500) operable to receive at least some of said signal stored in said computer-readable memory, and then to process said signal and suggest to a user a suggested adjustment (370) of the user-adjustable feature of the vehicle shock absorber (25; 80), and optionally to display said signal corresponding to the operational characteristic measured by the sensor.

14. A vehicle (100) comprising a processor (65; 300) and a computer-readable memory as claimed in claim 12.

## Patentansprüche

1. Vorrichtung (1000) für ein Fahrzeug (100), umfassend:
eine Fahrzeugfederung (25; 80),
wobei die Fahrzeugfederung einen Fahrzeugstoßdämpfer umfasst, wobei der Fahrzeugstoßdämpfer zwischen einem ungefederten Teil des Fahrzeugs und einem gefederten Teil des Fahrzeugs angebracht ist und eine vom Benutzer einstellbare Funktion zum Einstellen der Leistung des Fahrzeugstoßdämpfers aufweist;
einen Sensor (5, 5b, 5c, 35; 200) der einsetzbar ist, um eine betriebsbedingtes Merkmal des Fahrzeugstoßdämpfers (25; 80) zu messen und um ein repräsentatives Signal dieses betriebsbedingten Merkmals auszugeben; und
einen Prozessor (65; 300) in Kommunikation mit dem Sensor (5, 5b, 5c, 35; 200) und einsetzbar, um das Signal zu empfangen und zu verarbeiten;
**dadurch gekennzeichnet, dass** der Prozessor (65; 300) einsetzbar ist, um eine vorgeschlagene Einstellung (370) von dem benutzereinstellbaren Merkmal zu generieren, basierend auf dem Verarbeiten des Signals, wobei die vorgeschlagene Einstellung die Leistung der Fahrzeugfederung (25; 80) ändern würde, und um die vorgeschlagene Einstellung zur Indikation an den Benutzer auszugeben.

2. Vorrichtung gemäß Anspruch 1, wobei der Fahrzeugstoßdämpfer mindestens eines von einem Frontstoßdämpfer (80) und einem Heckstoßdämpfer (25) eines Fahrzeugs beinhaltet.

3. Vorrichtung gemäß Anspruch 1 oder 2, wobei der Sensor (5, 5b, 5c, 35; 200) einen Positionssensor beinhaltet und das betriebsbedingte Merkmal eine Position der Fahrzeugfederung (25; 80) beinhaltet.

4. Vorrichtung gemäß Anspruch 3, wobei die Position der Fahrzeugfederung (25; 80) einem Fahrzeugfederweg während Kompression oder Entspannung der Fahrzeugfederung entspricht.

5. Vorrichtung gemäß einem der Ansprüche 1 bis 4, wobei der Prozessor (65; 300) in Kommunikation mit dem Sensor über mindestens eines von gekabelter Kommunikation und kabelloser Kommunikation ist.

6. Vorrichtung gemäß einem der vorangehenden Ansprüche, wobei der Sensor (5, 5b, 5c, 35; 200) einsetzbar ist, um eine Vielzahl von betriebsbedingten Merkmalen der Fahrzeugfederung (25; 80) zu messen, wobei die Vielzahl der betriebsbedingten Merkmale Position, Geschwindigkeit und Beschleunigung der Fahrzeugfederung beinhaltet.

7. Vorrichtung gemäß einem der vorangehenden Ansprüche, wobei der Sensor (5, 5b, 5c, 35; 200) wenigstens eines von einem Potentiometer, einem Beschleunigungssensor, einem GPS, einem Drucksensor und einem piezoelektrischen Sensor beinhaltet.

8. Vorrichtung gemäß einem vorangehenden Anspruch, weiterhin umfassend ein Computersystem (400), das einsetzbar ist, um mit dem Prozessor (65; 300) zu kommunizieren und um Daten, welche dem betriebsbedingten Merkmal entsprechen, die durch den Sensor (5, 5b, 5c, 35; 200) gemessen werden, anzuzeigen.

9. Vorrichtung gemäß Anspruch 8, wobei das mindestens eine Computersystem (400) und Kommunikationsvorrichtung (500) mindestens eines von einem Desktop-Personal-Computer (PC), einem Laptop-Computer und einem Handheld-PC-Gerät beinhaltet.

10. Vorrichtung gemäß Anspruch 8 oder 9, wobei das Computersystem (400) durch den Benutzer einsetzbar ist, um die vorgeschlagene Einstellung (370) an dem benutzereinstellbaren Merkmal des Fahrzeugstoßdämpfers (25; 80) vorzunehmen.

11. Vorrichtung gemäß einem der Ansprüche 1 bis 7, wobei der Prozessor (i) einen ersten Prozessor (300) zum Befestigen an dem Fahrzeug (100) und einsetzbar zum Empfangen des Signals von dem Sensor (5, 5b, 5c, 35; 200) und (ii) einen zweiten Prozessor, welcher entfernt von dem ersten Prozessor (300) genutzt wird und welcher einsetzbar ist, um mit dem ersten Prozessor zu kommunizieren, umfasst und wobei:
der erste Prozessor einsetzbar ist, um das Signal zu verarbeiten, um die vorgeschlagene Einstellung (370) zu generieren und um die vorgeschlagene Einstellung (370) zu dem zweiten Prozessor zu kommunizieren;
und/oder
der erste Prozessor einsetzbar ist, um Daten, welche mindestens einen Teil des Signals repräsentieren, zu dem zweiten Prozessor zu kommunizieren.

12. Zur Verwendung in einer Vorrichtung gemäß einem der Ansprüche 1 bis 11, ein Prozessor (65; 300) und ein computerlesbarer Speicher, beide befestigbar an einem Fahrzeug (100), wobei der computerlesbare Speicher computerausführbare Befehle speichert, die, wenn ausgeführt, den Prozessor (65; 300) veranlassen, ein Signal von dem Sensor zu empfangen, das dem betriebsbedingten Merkmal der Fahrzeugfederung (25; 80) entspricht, und mindestens etwas von dem Signal in dem computerlesbaren Speicher zu speichern;
und um das folgende durchzuführen:
das Signal zu verarbeiten und die vorgeschlagene Einstellung (370) zu generieren, und optional die vorgeschlagene Einstellung (370) zu einer entfernten Kommunikationsvorrichtung (500) zu übertragen; und optional
mindestens einen Teil des Signals zu der entfernten Kommunikationsvorrichtung (500) zu übertragen.

13. Zur Verwendung mit einem Prozessor (65; 300) und einem computerlesbaren Speicher gemäß Anspruch 12, eine Kommunikationsvorrichtung (500) einsetzbar, mindestens einen Teil des Signals, welches in dem computerlesbaren Speicher gespeichert ist zu empfangen und dann das Signal zu verarbeiten und dem Benutzer eine vorgeschlagene Einstellung (370) von dem benutzereinstellbaren Merkmal des Fahrzeugstoßdämpfers (25; 80) vorzuschlagen, und optional das Signal, welches dem betriebsgemäßen Merkmal, welches durch den Sensor gemessen wurde, entspricht, anzuzeigen.

14. Ein Fahrzeug (100), welches einen Prozessor (65; 300) und einen computerlesbaren Speicher gemäß Anspruch 13 umfasst.

## Revendications

1. Système (1000) pour un véhicule (100), comprenant :
une suspension de véhicule (25 ; 80),
dans lequel la suspension de véhicule comprend un absorbeur de choc de véhicule, dans lequel l'absorbeur de choc de véhicule est monté entre une portion non suspendue du véhicule et une portion suspendue du véhicule et ayant un élément ajustable par l'utilisateur pour ajuster une performance de l'absorbeur de choc de véhicule ;
un capteur (5, 5b, 5c, 35 ; 200) pouvant fonctionner pour mesurer une caractéristique fonctionnelle de l'absorbeur de choc de véhicule (25 ; 80) et pour fournir en sortie un signal représentatif de ladite caractéristique fonctionnelle ; et
un processeur (65 ; 300) en communication avec le capteur (5, 5b, 5c, 35 ; 200) et pouvant fonctionner pour recevoir et traiter ledit signal ;
**caractérisé en ce que** ledit processeur (65 ; 300) peut fonctionner pour générer un ajustement suggéré (370) de l'élément ajustable par l'utilisateur sur la base du traitement dudit signal, lequel ajustement suggéré modifierait la performance de l'absorbeur de choc de véhicule (25 ; 80), et pour fournir en sortie ledit ajustement suggéré pour une indication à l'utilisateur ;
dans lequel le système comprend en outre un dispositif de communication (500) pouvant fonctionner pour communiquer avec le processeur (35 ; 300) et afficher des données correspondant à la caractéristique fonctionnelle mesurée par le capteur (5, 5b, 5c, 35 ; 200) ;
**caractérisé en ce que** le dispositif de communication (500) peut être mis en fonctionnement par l'utilisateur pour effectuer l'ajustement suggéré (370) sur l'élément ajustable par l'utilisateur de la suspension de véhicule (25 ; 80) ;
dans lequel la suspension de véhicule comporte une soupape d'amortisseur, et la caractéristique fonctionnelle est une position de la soupape d'amortisseur entre un réglage totalement ouvert et un réglage totalement fermé.

2. Système selon la revendication 1, dans lequel l'absorbeur de choc de véhicule comporte au moins l'un parmi un absorbeur de choc avant et un absorbeur de choc arrière d'un véhicule.

3. Système selon la revendication 1 ou 2, dans lequel le capteur (5, 5b, 5c, 35 ; 200) comporte un capteur de position et la caractéristique fonctionnelle comporte une position de la suspension de véhicule (25 ; 80).

4. Système selon la revendication 3, dans lequel la position de la suspension de véhicule (25 ; 80) correspond à une course de la suspension de véhicule pendant la compression ou le rebond de la suspension de véhicule.

5. Système selon l'une quelconque des revendications 1 à 4, dans lequel le processeur (65 ; 300) est en communication avec le capteur via au moins une communication filaire et une communication sans fil.

6. Système selon une quelconque revendication précédente, dans lequel le capteur (5, 5b, 5c, 35 ; 200) peut fonctionner pour mesurer une pluralité de caractéristiques fonctionnelles de la suspension de véhicule (25 ; 80), dans lequel la pluralité de caractéristiques fonctionnelles comportent une position, une vitesse, et une accélération de la suspension de véhicule.

7. Système selon une quelconque revendication précédente, dans lequel le capteur (5, 5b, 5c, 35 ; 200) comporte au moins l'un d'un potentiomètre, d'un accéléromètre, d'un GPS, d'un capteur de pression, et d'un capteur piézoélectrique.

8. Système selon une quelconque revendication précédente, comprenant en outre un système d'ordinateur (400) pouvant fonctionner pour communiquer avec le processeur (65 ; 300) et afficher des données correspondant à la caractéristique fonctionnelle mesurée par le capteur (5, 5b, 5c, 35 ; 200).

9. Système selon la revendication 8, dans lequel le système d'ordinateur (400) et un dispositif de communication (500) comportent au moins l'un d'un ordinateur de bureau personnel, d'un ordinateur portable, et d'un dispositif informatique personnel portatif.

10. Système selon la revendication 8 ou 9, dans lequel le système d'ordinateur (400) peut être mis en fonctionnement par l'utilisateur pour effectuer l'ajustement suggéré (370) sur l'élément ajustable par l'utilisateur de l'absorbeur de choc de véhicule (25 ; 80).

11. Système selon l'une quelconque des revendications 1 à 7, dans lequel ledit processeur comprend (i) un premier processeur (300) à monter sur ledit véhicule (100) et pouvant fonctionner pour recevoir ledit signal depuis ledit capteur (5, 5b, 5c, 35 ; 200), et (ii) un second processeur à utiliser à distance dudit premier processeur (300) et pouvant fonctionner pour communiquer avec ledit premier processeur, et dans lequel :
ledit premier processeur peut fonctionner pour traiter ledit signal afin de générer ledit ajustement suggéré (370), et pour communiquer ledit ajustement suggéré (370) audit second processeur ;
et/ou
ledit premier processeur peut fonctionner pour communiquer des données représentant au moins une partie dudit signal audit second processeur.

12. Pour une utilisation dans un système tel que revendiqué dans l'une quelconque des revendications 1 à 11, processeur (65 ; 300) et mémoire lisible par ordinateur pouvant tous deux être montés sur un véhicule (100), ladite mémoire lisible par ordinateur stockant des instructions exécutables par ordinateur qui, lorsqu'elles sont exécutées, amènent ledit processeur (65 ; 300) à recevoir un signal depuis le capteur correspondant à la caractéristique fonctionnelle de l'absorbeur de choc de véhicule (25 ; 80) et à stocker au moins une partie dudit signal dans ladite mémoire lisible par ordinateur ;
et à réaliser ce qui suit :
traiter ledit signal et générer ledit ajustement suggéré (370), et facultativement transmettre ledit ajustement suggéré (370) à un dispositif de communication (500) distant ; et facultativement
transmettre au moins une partie dudit signal audit dispositif de communication (500) distant.

13. Pour une utilisation avec un processeur (65 ; 300) et une mémoire lisible par ordinateur tels que revendiqués dans la revendication 12, dispositif de communication (500) pouvant fonctionner pour recevoir au moins une partie dudit signal stocké dans ladite mémoire lisible par ordinateur, puis traiter ledit signal et suggérer à un utilisateur un ajustement suggéré (370) de l'élément ajustable par l'utilisateur de l'absorbeur de choc de véhicule (25 ; 80), et facultativement pour afficher ledit signal correspondant à la caractéristique fonctionnelle mesurée par le capteur.

14. Véhicule (100) comprenant un processeur (65 ; 300) et une mémoire lisible par ordinateur tels que revendiqués dans la revendication 12.
